# EUROPEAN PATENT APPLICATION

(11) **EP 4 819 567 A1**
(43) Date of publication of application: **07.10.2026**
(21) Application number: 26168674.5
(22) Date of filing: 27.03.2026
(51) Int. Cl.: H04L 45/02, H04L 47/125

(54) **COMMUNICATION METHOD, APPARATUS, AND SYSTEM**

(30) Priority: 31.03.2025 CN 202510398637
(71) Applicant: Huawei Technologies Co., Ltd., Shenzhen, Guangdong 518129 (CN)
(72) Inventor: Wang, Haibo, Shenzhen, 518129 (CN); Guan, Zixuan, Shenzhen, 518129 (CN); Huang, Chao, Shenzhen, 518129 (CN); Zhu, Zhu, Shenzhen, 518129 (CN)
(74) Representative: Goddar, Heinz J.

(57) **Abstract**

This application discloses a communication method, apparatus, and system, and pertains to the field of communication technologies. The method is performed by a first network device in a first DC. The method includes: obtaining a node identifier of a first access device in the first DC; and sending the node identifier of the first access device, first link bandwidth indication information, and first interface mapping information to a second network device in a second DC, where the first link bandwidth indication information indicates a total bandwidth of all normal links that are used to transmit traffic and that are between the first network device and the first access device, and the first interface mapping information indicates a mapping relationship between at least one network-side interface and at least one access-side interface in the first network device. In this way, when determining a first transmission link for forwarding traffic to the first access device, the second network device can ensure that a total bandwidth of the first transmission link is not greater than the total bandwidth of the normal links between the first access device and the first network device, to avoid traffic congestion in the first DC.

## Description

### TECHNICAL FIELD

This application relates to the field of communication technologies, and in particular, to a communication method, apparatus, and system.

### BACKGROUND

With the continuous development of artificial intelligence (artificial intelligence, AI) services, a scale of intelligent computing data required for AI training is increasingly larger. However, a single data center (data center, DC) may fail to meet a scale requirement of AI training. Therefore, a plurality of DCs need to be interconnected to provide parallel computation paths for AI training to meet the scale requirement of AI training. Generally, the intelligent computing data is data generated, processed, and used in an intelligent computing (intelligent computing) process.

In a DC interconnection scenario, if traffic from a source DC to a destination DC is congested in the destination DC due to a link fault in the destination DC, the destination DC sends a backpressure control packet to the source DC to indicate the source DC to stop or slow down traffic sending. In this way, a traffic congestion problem in the destination DC can be alleviated as the source DC stops or slows down traffic sending. After the destination DC resolves the traffic congestion problem by using the backpressure control packet, if the destination DC does not recover from the link fault in this case, traffic from the source DC to the destination DC may be congested again in the destination DC, and the destination DC needs to send a backpressure control packet to the source DC again, to cause the source DC to stop or slow down a rate of sending traffic. In other words, before the destination DC recovers from the link fault, traffic in the destination DC is repeatedly congested, and each time congestion occurs, a backpressure control packet needs to be sent to the source DC to resolve the traffic congestion problem.

In this case, if a communication link distance between the source DC and the destination DC is long (for example, reaches 100 kilometers), a communication delay between the DCs reaches a millisecond (millisecond, ms) level. Therefore, the backpressure control packet sent by the destination DC to the source DC each time traffic congestion occurs needs a specific time window to reach the source DC from the destination DC. However, in the time window in which the destination DC sends the backpressure control packet to the source DC each time traffic congestion occurs, the source DC continuously sends traffic to the destination DC. As a result, a receiving buffer (buffer) of a switch, in the destination DC, connected to the source DC overflows, causing a packet loss.

### SUMMARY

This application provides a communication method, apparatus, and system. The method can avoid traffic congestion in a first DC that receives traffic from a second DC.

Technical solutions provided in this application are as follows:
According to a first aspect, this application provides a communication method. The method is performed by a first network device in a first DC, and the method includes: obtaining a node identifier of a first access device in the first DC; and sending the node identifier of the first access device, first link bandwidth indication information, and first interface mapping information to a second network device in a second DC, where the first link bandwidth indication information indicates a total bandwidth of all normal links that are used to transmit traffic and that are between the first network device and the first access device, the first interface mapping information indicates a mapping relationship between at least one network-side interface and at least one access-side interface in the first network device, the at least one network-side interface is configured to connect to the second network device, and the at least one access-side interface is configured to connect to the first access device.

According to the method provided in this application, the second network device in the second DC may receive the node identifier of the first access device, the first link bandwidth indication information, and the first interface mapping information that are sent by the first network device in the first DC. Therefore, when determining a transmission link that is used to forward traffic to the first access device and that is between the first network device and the second network device, the second network device may refer to a total bandwidth of normal links between an access device and a network device in the first DC, to ensure that a total bandwidth of the determined transmission link is not greater than the total bandwidth of the normal links between the first access device and the first network device. In other words, when the second DC sends traffic to the first DC, a bandwidth of the transmission link, used as an upstream link, that is used to forward the traffic to the first access device and that is between the first network device and the second network device is greater than or equal to a bandwidth of a normal link used as a downstream link between the first access device and the first network device. In addition, the second network device may further determine the transmission link with reference to the first interface mapping information. In this way, it can be ensured that traffic forwarded by the second network device to the first access device can be distributed on different transmission links between the first access device and the first network device after the traffic reaches the first network device from the second network device. Therefore, when no fault occurs between the first access device and the first network device, the method in this application can avoid traffic congestion in the first DC (that is, the first network device). However, when a fault occurs between the first access device and the first network device, according to the method in this application, it can also be ensured that traffic congestion does not occur again in the first DC (that is, the first network device) before fault recovery after traffic congestion caused by the fault is alleviated by enabling a backpressure control mechanism once, to mitigate a packet loss caused by the backpressure control mechanism and a long distance between the first network device and the second network device.

In a possible design, the obtaining the node identifier of the first access device includes: receiving a first border gateway protocol (border gateway protocol, BGP) update (Update) message sent by the first access device, where the first BGP update message carries the node identifier of the first access device.

In another possible design, the first BGP update message carries the node identifier of the first access device by reusing an extended community attribute, using a new attribute, or using a new extended attribute.

According to the foregoing two possible designs, a BGP update message carries the node identifier of the first access device. This solution is easy to implement.

In still another possible design, the obtaining the node identifier of the first access device includes: receiving the node identifier of the first access device sent by the first access device according to a transmission control protocol (transmission control protocol, TCP) or a user datagram protocol (user datagram protocol, UDP).

According to this possible design, the node identifier of the first access device is transmitted over a dedicated channel such as the TCP or the UDP. If there are a plurality of links between devices, compared with a solution in which the node identifier of the first access device is carried in the BGP update message and the node identifier of the first access device needs to be transferred on each link, in this design, the node identifier of the first access device needs to be sent only once over the dedicated channel such as the TCP or the UDP.

In still another possible design, the sending the node identifier of the first access device, the first link bandwidth indication information, and the first interface mapping information to the second network device includes: sending a second BGP update message to the second network device, where the second BGP update message carries the node identifier of the first access device, the first link bandwidth indication information, and the first interface mapping information.

According to the foregoing possible design, a BGP update message carries the node identifier of the first access device, the first link bandwidth indication information, and the first interface mapping information. In this solution, when updating a route based on the BGP update message, a device that receives the BGP update message determines a specific transmission link based on the node identifier of the first access device, the first link bandwidth indication information, and the first interface mapping information that are carried in the BGP update message. Therefore, timeliness of determining the transmission link based on the solution in this application is good.

In still another possible design, the first link bandwidth indication information includes one or more of the following: a total bandwidth value of all the normal links, a quantity of all the normal links, or a bandwidth value of at least one of all the normal links.

According to this possible design, the total bandwidth indicated by the first link bandwidth indication information may be implemented in a plurality of implementations, that is, flexibly implemented.

In still another possible design, the first interface mapping information includes identification information of a network-side interface, identification information of an access-side interface, and an interface mapping rule.

According to this possible design, a specific implementation of a mapping relationship indicated by the first interface mapping information is provided.

In still another possible design, the second BGP update message carries the first link bandwidth indication information by using a new attribute, using a new extended attribute, or reusing an extended attribute.

In still another possible design, the second BGP update message carries the first interface mapping information by using a new attribute or a new extended attribute.

According to the foregoing two possible designs, a plurality of implementations of carrying the first link bandwidth indication information and the first interface mapping information are provided. The implementations are flexible and diversified for implementation.

In still another possible design, the sending the node identifier of the first access device, the first link bandwidth indication information, and the first interface mapping information to the second network device includes: sending the node identifier of the first access device, the first link bandwidth indication information, and the first interface mapping information to the second network device according to the TCP or the UDP.

According to this possible design, the node identifier of the first access device, the first link bandwidth indication information, and the first interface mapping information are transmitted over the dedicated channel such as the TCP or the UDP. Compared with a solution in which the BGP update message carries the node identifier of the first access device, the first link bandwidth indication information, and the first interface mapping information, if there are a plurality of links between devices, in this design, the node identifier of the first access device, the first link bandwidth indication information, and the first interface mapping information only need to be sent over the dedicated channel such as the TCP or the UDP, but in the solution in which the node identifier of the first access device, the first link bandwidth indication information, and the first interface mapping information are carried in the BGP update message, the node identifier of the first access device needs to be transferred on each link.

In still another possible design, all the normal links include a plurality of links, the plurality of links include a first link, and the method further includes: sending the node identifier of the first access device, updated second link bandwidth indication information, and updated second interface mapping information to the second network device in response to a fault of the first link.

According to this possible design, after a fault occurs on the first link, the first network device immediately sends the node identifier of the first access device, the updated second link bandwidth indication information, and the updated second interface mapping information to the second network device. In this way, the second network device can immediately update the transmission link that is used to forward the traffic to the first access device and that is between the first network device and the second network device. This can ensure that before the first link recovers from the fault, the bandwidth of the transmission link, used as the upstream link, that is used to forward the traffic to the first access device and that is between the first network device and the second network device is greater than or equal to the bandwidth of the normal link used as the downstream link between the first access device and the first network device. Therefore, before the first link recovers, traffic congestion does not occur again on the first network device after the first network device enables the backpressure control mechanism once to alleviate traffic congestion caused by the fault of the first link, to mitigate the packet loss caused by the backpressure control mechanism and the long distance between the first network device and the second network device.

In still another possible design, the method further includes: sending the node identifier of the first access device, updated third link bandwidth indication information, and updated third interface mapping information to the second network device in response to the first link returning to normal.

According to this possible design, after the first link recovers, the first network device immediately sends the node identifier of the first access device, the updated third link bandwidth indication information, and the updated third interface mapping information to the second network device. In this way, the second network device can immediately update the transmission link that is used to forward the traffic to the first access device and that is between the first network device and the second network device. This can ensure that after the first link recovers from the fault, the bandwidth of the transmission link, used as the upstream link, that is used to forward the traffic to the first access device and that is between the first network device and the second network device is still greater than or equal to the bandwidth of the normal link used as the downstream link between the first access device and the first network device. In addition, an updated bandwidth, of the transmission link that is used to forward the traffic to the first access device and that is between the first network device and the second network device, after the first transmission link recovers is greater than the bandwidth, of the transmission link that is used to forward the traffic to the first access device and that is between the first network device and the second network device, before the first transmission link recovers. Therefore, in this possible design, when the second DC sends traffic to the first access device, an upstream link bandwidth of the first link increases in real time in response to the first link recovering from the fault, to improve network bandwidth utilization and improve traffic sending efficiency.

In still another possible design, the first access device is a top of rack (top of rack, TOR) switch, and the first network device and the second network device are Spine (Spine) switches.

In still another possible design, the node identifier of the first access device is an identifier (identifier, ID) of the first access device or a loopback address of the first access device.

According to a second aspect, this application provides a communication method. The method is performed by a second network device in a second DC, and the method includes: receiving a node identifier of a first access device, first link bandwidth indication information, and first interface mapping information that are sent by a first network device; and determining, based on the node identifier of the first access device, the first link bandwidth indication information, and the first interface mapping information, a first transmission link that is used to forward traffic to the first access device and that is between the first network device and the second network device, where the first network device and the first access device are devices in a first DC, the first link bandwidth indication information indicates a total bandwidth of all normal links that are used to transmit traffic and that are between the first network device and the first access device, the first interface mapping information indicates a mapping relationship between at least one network-side interface and at least one access-side interface in the first network device, the at least one network-side interface is configured to connect to the second network device, and the at least one access-side interface is configured to connect to the first access device.

In a possible design, a total bandwidth of the first transmission link is less than or equal to the total bandwidth indicated by the first link bandwidth indication information.

In another possible design, the first link bandwidth indication information includes one or more of the following: a total bandwidth value of all the normal links, a quantity of all the normal links, or a bandwidth value of at least one of all the normal links.

In still another possible design, the first interface mapping information includes identification information of a network-side interface, identification information of an access-side interface, and an interface mapping rule.

In still another possible design, the receiving the node identifier of the first access device, the first link bandwidth indication information, and the first interface mapping information that are sent by the first network device includes: receiving a second BGP update message sent by the first network device, where the second BGP update message carries the node identifier of the first access device, the first link bandwidth indication information, and the first interface mapping information.

In still another possible design, the receiving the node identifier of the first access device, the first link bandwidth indication information, and the first interface mapping information that are sent by the first network device includes: receiving, according to the TCP or the UDP, the node identifier of the first access device, the first link bandwidth indication information, and the first interface mapping information that are sent by the first network device.

In still another possible design, the method further includes: receiving the node identifier of the first access device, second link bandwidth indication information, and second interface mapping information that are sent by the first network device; and determining, based on the node identifier of the first access device, the second link bandwidth indication information, and the second interface mapping information, a second transmission link that is used to forward traffic to the first access device and that is between the first network device and the second network device, where a total bandwidth of the second transmission link is less than or equal to a total bandwidth indicated by the second link bandwidth indication information, and the total bandwidth of the second transmission link is less than the total bandwidth of the first transmission link.

In still another possible design, the method further includes: receiving the node identifier of the first access device, third link bandwidth indication information, and third interface mapping information that are sent by the second network device; and determining, based on the node identifier of the first access device, the third link bandwidth indication information, and the third interface mapping information, a third transmission link that is used to forward traffic to the first access device and that is between the first network device and the second network device, where a total bandwidth of the third transmission link is greater than the total bandwidth of the second transmission link.

For beneficial effects of the solutions provided in the foregoing possible designs, refer to the descriptions of the beneficial effects of corresponding solutions in the first aspect. Details are not described herein again.

In still another possible design, the method further includes: after receiving the node identifier of the first access device, the first link bandwidth indication information, and the first interface mapping information that are sent by the first network device, sending the node identifier of the first access device and the first link bandwidth indication information to a second access device, where the second access device is an access device that is in the second DC and that sends traffic to the second network device.

According to this possible design, when determining a transmission link that is used to forward traffic to the first access device and that is between the second access device and the second network device, the second access device may comprehensively consider a total bandwidth that is of all normal links between the first access device and the first network device in the first DC and that is received from the second network device, to ensure that a total bandwidth of the transmission link that is used to forward the traffic to the first access device and that is between the second access device and the second network device is not greater than a total bandwidth of a transmission link that is used to forward traffic to the first access device and that is between the first network device and the second network device. In this way, it can be ensured that when the second DC forwards traffic to the first access device on the transmission link determined by the second access device and the first transmission link determined by the second network device, traffic congestion does not occur on the first network device and the second network device, so that the first network device does not enable a backpressure control mechanism to alleviate congestion, and a case in which a packet loss occurs on the first network device when the first network device enables the backpressure control mechanism is further avoided. In other words, in the solution of this application, a location at which traffic congestion occurs can be moved forward to the second access device that sends traffic to the first access device.

In still another possible design, the sending the node identifier of the first access device and the first link bandwidth indication information to the second access device includes: sending a third BGP update message to the second access device, where the third BGP update message carries the node identifier of the first access device and the first link bandwidth indication information.

In still another possible design, the sending the node identifier of the first access device and the first link bandwidth indication information to the second access device includes: sending the node identifier of the first access device and the first link bandwidth indication information to the second access device according to the TCP or the UDP.

In still another possible design, the method further includes: sending a backpressure control packet to the second access device in response to occurrence of traffic congestion, where the backpressure control packet is used to adjust a rate of traffic sent to the second network device, and the second access device is the access device that is in the second DC and that sends the traffic to the second network device.

In still another possible design, all the normal links between the first network device and the second network device include a plurality of links, and the method further includes: in response to a fault of any one of the plurality of links, re-determining, based on the node identifier of the first access device, the first link bandwidth indication information, and the first interface mapping information, a transmission link that is used to forward traffic to the first access device and that is between the first network device and the second network device.

According to this possible design, when a fault occurs on any one of the plurality of links that are used to forward the traffic and that are between the first network device and the second network device, if the faulty link is a link used to forward traffic to the first access device, the link fault causes a decrease in a link bandwidth that is sent by the second network device to the first network device and that is destined for the first access device. Consequently, traffic that is sent by the second network device to the first network device and that is destined for the first access device is reduced. Because all links between the first network device and the first access device are normal, a part of links between the first network device and the first access device are idle, causing a waste of bandwidth resources and reducing traffic forwarding efficiency. However, the second network device can determine, by performing the solution provided in this possible design from remaining links other than the faulty link between the first network device and the second network device, a transmission link adapted to the first link bandwidth indication information. Therefore, when traffic is forwarded to the first access device based on the transmission link, utilization of the link between the first access device and the first network device can be improved when a fault occurs on the link between the first network device and the second network device.

According to a third aspect, this application provides a communication method. The method is performed by a second network device in a second DC, and the method includes: receiving a node identifier of a first access device in a first DC, first link bandwidth indication information, and first interface mapping information that are sent by a first network device in the first DC; and in response to a fault of any one of a plurality of links that are used to forward traffic and that are between the first network device and the second network device, re-determining, based on the node identifier of the first access device, the first link bandwidth indication information, and the first interface mapping information, a transmission link that is used to forward traffic to the first access device and that is between the first network device and the second network device, where the first link bandwidth indication information indicates a total bandwidth of all normal links that are used to transmit traffic and that are between the first network device and the first access device, the first interface mapping information indicates a mapping relationship between at least one network-side interface and at least one access-side interface in the first network device, the at least one network-side interface is configured to connect to the second network device, and the at least one access-side interface is configured to connect to the first access device.

According to the solution provided in this application, when a fault occurs on any one of the plurality of links that are used to forward the traffic and that are between the first network device and the second network device, if the faulty link is a link used to forward traffic to the first access device, the link fault causes a decrease in a link bandwidth that is sent by the second network device to the first network device and that is destined for the first access device. Consequently, traffic that is sent by the second network device to the first network device and that is destined for the first access device is reduced. Because all links between the first network device and the first access device are normal, a part of links between the first network device and the first access device are idle, causing a waste of bandwidth resources and reducing traffic forwarding efficiency. However, the second network device can determine, by performing the solution provided in this possible design from remaining links other than the faulty link between the first network device and the second network device, a transmission link adapted to the first link bandwidth indication information. Therefore, when traffic is forwarded to the first access device based on the transmission link, utilization of the link between the first access device and the first network device can be improved when a fault occurs on the link between the first network device and the second network device.

According to a fourth aspect, this application provides a communication method. The method is performed by a second access device in a second DC, and the method includes: receiving link bandwidth indication information and a node identifier of a first access device that are sent by a second network device in the second DC, where the first access device is any access device in a first DC, the first DC further includes a first network device, the link bandwidth indication information indicates a total bandwidth of all normal links that are used to transmit traffic and that are between the first access device and the first network device, and the first access device communicates with the second access device via the first network device and the second network device; and determining, based on the link bandwidth indication information and the node identifier of the first access device, a transmission link that is used to transmit traffic to the first access device and that is between the second network device and the second access device.

In a possible design, the receiving the link bandwidth indication information and the node identifier of the first access device that are sent by the second network device in the second DC includes: receiving a BGP update message sent by the second network device, where the BGP update message includes the link bandwidth indication information and the node identifier of the first access device.

In another possible design, the receiving the link bandwidth indication information and the node identifier of the first access device that are sent by the second network device in the second DC includes: receiving, according to the TCP or the UDP, the link bandwidth indication information and the node identifier of the first access device that are sent by the second network device.

For beneficial effects of the solutions provided in the foregoing possible designs, refer to the descriptions of the beneficial effects of corresponding solutions in the second aspect. Details are not described herein again.

According to a fifth aspect, this application provides a communication method. The method is performed by a first access device in a first DC, and the method includes: sending a node identifier of the first access device to a first network device in the first DC.

In a possible design, the sending the node identifier of the first access device to the first network device in the first DC includes: sending a first BGP update message to the first network device, where the first BGP update message carries the node identifier of the first access device.

In another possible design, the sending the node identifier of the first access device to the first network device in the first DC includes: sending the node identifier of the first access device to the first network device according to the TCP or the UDP.

According to a sixth aspect, this application provides a communication apparatus. The apparatus is used for a first network device in a first DC, and the apparatus includes: an obtaining unit, configured to obtain a node identifier of a first access device in the first DC; and a sending unit, configured to send the node identifier of the first access device, first link bandwidth indication information, and first interface mapping information to a second network device in a second DC. The first link bandwidth indication information indicates a total bandwidth of all normal links that are used to transmit traffic and that are between the first network device and the first access device. The first interface mapping information indicates a mapping relationship between at least one network-side interface and at least one access-side interface in the first network device, the at least one network-side interface is configured to connect to the second network device, and the at least one access-side interface is configured to connect to the first access device.

In a possible design, the apparatus further includes a receiving unit, configured to receive a first BGP update message sent by the first access device, where the first BGP update message carries the node identifier of the first access device.

In another possible design, the first BGP update message carries the node identifier of the first access device by reusing an extended community attribute, using a new attribute, or using a new extended attribute.

In still another possible design, the receiving unit is configured to receive the node identifier of the first access device sent by the first access device according to the TCP or the UDP.

In still another possible design, the sending unit is specifically configured to send a second BGP update message to the second network device, where the second BGP update message carries the node identifier of the first access device, the first link bandwidth indication information, and the first interface mapping information.

In still another possible design, the first link bandwidth indication information includes one or more of the following: a total bandwidth value of all the normal links, a quantity of all the normal links, or a bandwidth value of at least one of all the normal links.

In still another possible design, the second BGP update message carries the first link bandwidth indication information by using a new attribute, using a new extended attribute, or reusing an extended attribute.

In still another possible design, the first interface mapping information includes identification information of a network-side interface, identification information of an access-side interface, and an interface mapping rule.

In still another possible design, the second BGP update message carries the first interface mapping information by using a new attribute or a new extended attribute.

In still another possible design, the sending unit is specifically configured to send the node identifier of the first access device, the first link bandwidth indication information, and the first interface mapping information to the second network device according to the TCP or the UDP.

In still another possible design, all the normal links include a plurality of links, the plurality of links include a first link, and the sending unit is further configured to send the node identifier of the first access device, updated second link bandwidth indication information, and updated second interface mapping information to the second network device in response to a fault of the first link.

In still another possible design, the sending unit is further configured to send the node identifier of the first access device, updated third link bandwidth indication information, and updated third interface mapping information to the second network device in response to the first link returning to normal.

In still another possible design, the first access device is a TOR switch, and the first network device and the second network device are Spine switches.

In still another possible design, the node identifier of the first access device is an ID of the first access device or a loopback address of the first access device.

According to a seventh aspect, this application provides a communication apparatus. The apparatus is used for a second network device in a second DC, and the apparatus includes: a receiving unit, configured to receive a node identifier of a first access device, first link bandwidth indication information, and first interface mapping information that are sent by a first network device; and a determining unit, configured to determine, based on the node identifier of the first access device, the first link bandwidth indication information, and the first interface mapping information, a first transmission link that is used to forward traffic to the first access device and that is between the first network device and the second network device, where the first network device and the first access device are devices in a first DC, the first link bandwidth indication information indicates a total bandwidth of all normal links that are used to transmit traffic and that are between the first network device and the first access device, the first interface mapping information indicates a mapping relationship between at least one network-side interface and at least one access-side interface in the first network device, the at least one network-side interface is configured to connect to the second network device, and the at least one access-side interface is configured to connect to the first access device.

In a possible design, a total bandwidth of the first transmission link is less than or equal to the total bandwidth indicated by the first link bandwidth indication information.

In another possible design, the first link bandwidth indication information includes one or more of the following: a total bandwidth value of all the normal links, a quantity of all the normal links, or a bandwidth value of at least one of all the normal links.

In still another possible design, the first interface mapping information includes identification information of a network-side interface, identification information of an access-side interface, and an interface mapping rule.

In still another possible design, the receiving unit is specifically configured to receive a second BGP update message sent by the first network device, where the second BGP update message carries the node identifier of the first access device, the first link bandwidth indication information, and the first interface mapping information.

In still another possible design, the receiving unit is specifically configured to receive, according to the TCP or the UDP, the node identifier of the first access device, the first link bandwidth indication information, and the first interface mapping information that are sent by the first network device.

In still another possible design, the receiving unit is further configured to receive the node identifier of the first access device, second link bandwidth indication information, and second interface mapping information that are sent by the first network device. The determining unit is further configured to determine, based on the node identifier of the first access device, the second link bandwidth indication information, and the second interface mapping information, a second transmission link that is used to forward traffic to the first access device and that is between the first network device and the second network device, where a total bandwidth of the second transmission link is less than or equal to a total bandwidth indicated by the second link bandwidth indication information, and the total bandwidth of the second transmission link is less than the total bandwidth of the first transmission link.

In still another possible design, the receiving unit is further configured to receive the node identifier of the first access device, third link bandwidth indication information, and third interface mapping information that are sent by the second network device. The determining unit is further configured to determine, based on the node identifier of the first access device, the third link bandwidth indication information, and the third interface mapping information, a third transmission link that is used to forward traffic to the first access device and that is between the first network device and the second network device, where a total bandwidth of the third transmission link is greater than the total bandwidth of the second transmission link.

In still another possible design, the apparatus further includes a sending unit, configured to: after receiving the node identifier of the first access device, the first link bandwidth indication information, and the first interface mapping information that are sent by the first network device, send the node identifier of the first access device and the first link bandwidth indication information to a second access device, where the second access device is an access device that is in the second DC and that sends traffic to the second network device.

In still another possible design, the sending unit is specifically configured to send a third BGP update message to the second access device, where the third BGP update message carries the node identifier of the first access device and the first link bandwidth indication information.

In still another possible design, the sending unit is specifically configured to send the node identifier of the first access device and the first link bandwidth indication information to the second access device according to the TCP or the UDP.

In still another possible design, the sending unit is further configured to send a backpressure control packet to the second access device in response to occurrence of traffic congestion, where the backpressure control packet is used to adjust a rate of traffic sent to the second network device, and the second access device is the access device that is in the second DC and that sends the traffic to the second network device.

In still another possible design, all the normal links between the first network device and the second network device include a plurality of links, and the determining unit is further configured to: in response to a fault of any one of the plurality of links, re-determine, based on the node identifier of the first access device, the first link bandwidth indication information, and the first interface mapping information, a transmission link that is used to forward traffic to the first access device and that is between the first network device and the second network device.

According to an eighth aspect, this application provides a communication apparatus. The apparatus is used for a second network device in a second DC, and the apparatus includes: a receiving unit, configured to receive a node identifier of a first access device in a first DC, first link bandwidth indication information, and first interface mapping information that are sent by a first network device in the first DC; and a determining unit, configured to: in response to a fault of any one of a plurality of links that are used to forward traffic and that are between the first network device and the second network device, re-determine, based on the node identifier of the first access device, the first link bandwidth indication information, and the first interface mapping information, a transmission link that is used to forward traffic to the first access device and that is between the first network device and the second network device, where the first link bandwidth indication information indicates a total bandwidth of all normal links that are used to transmit traffic and that are between the first network device and the first access device, the first interface mapping information indicates a mapping relationship between at least one network-side interface and at least one access-side interface in the first network device, the at least one network-side interface is configured to connect to the second network device, and the at least one access-side interface is configured to connect to the first access device.

According to a ninth aspect, this application provides a communication apparatus. The apparatus is used for a second access device in a second DC, and the apparatus includes: a receiving unit, configured to receive link bandwidth indication information and a node identifier of a first access device that are sent by a second network device in the second DC, where the first access device is any access device in a first DC, the first DC further includes a first network device, the link bandwidth indication information indicates a total bandwidth of all normal links that are used to transmit traffic and that are between the first access device and the first network device, and the first access device communicates with the second access device via the first network device and the second network device; and a determining unit, configured to determine, based on the link bandwidth indication information and the node identifier of the first access device, a transmission link that is used to transmit traffic to the first access device and that is between the second network device and the second access device.

In a possible design, the receiving unit is specifically configured to receive a BGP update message sent by the second network device, where the BGP update message includes the link bandwidth indication information and the node identifier of the first access device.

In another possible design, the receiving unit is specifically configured to receive, according to the TCP or the UDP, the link bandwidth indication information and the node identifier of the first access device that are sent by the second network device.

According to a tenth aspect, this application provides a communication apparatus. The apparatus is used for a first access device in a first DC, and the apparatus includes a sending unit, configured to send a node identifier of the first access device to a first network device in the first DC.

In a possible design, the sending unit is specifically configured to send a first BGP update message to the first network device, where the first BGP update message carries the node identifier of the first access device.

In another possible design, the sending unit is specifically configured to send the node identifier of the first access device to the first network device according to the TCP or the UDP.

According to an eleventh aspect, this application provides a communication apparatus. The communication device includes a memory, a network interface, and one or more processors. The one or more processors receive or send data through the network interface, and the one or more processors are configured to read program instructions stored in the memory, to perform the method provided in any one of the first aspect and the possible designs of the first aspect, perform the method provided in any one of the second aspect and the possible designs of the second aspect, perform the method provided in any one of the third aspect and the possible designs of the third aspect, perform the method provided in any one of the fourth aspect and the possible designs of the fourth aspect, or perform the method provided in any one of the fifth aspect and the possible designs of the fifth aspect.

The communication apparatus in the fifth aspect, the sixth aspect, the seventh aspect, the eighth aspect, the ninth aspect, the tenth aspect, or the eleventh aspect may be, for example, any network device that can forward traffic, such as a router or a switch, or may be a component in the network device, such as a board or a line card, or may be a chip configured to implement the method in any one of the foregoing aspects and some or all operations in any possible design.

In a possible design, the communication apparatuses in the fifth aspect, the sixth aspect, and the seventh aspect may be Spine switches. The ninth aspect and the tenth aspect may be implemented as TOR switches. When the communication apparatus in the eleventh aspect performs the method provided in any one of the first aspect, the second aspect, the third aspect, and the possible designs of the first aspect, the second aspect, and the third aspect, the communication apparatus in the eleventh aspect may be implemented as a Spine switch. When the communication apparatus in the eleventh aspect performs the method provided in any one of the fourth aspect, the fifth aspect, and the possible designs of the fourth aspect and the fifth aspect, the communication apparatus in the eleventh aspect may be implemented as a TOR switch.

According to a twelfth aspect, this application provides a communication system. The system includes a first network device in a first DC and a second network device in a second DC. The first network device is configured to perform the method provided in any one of the first aspect and the possible designs of the first aspect, the second network device is configured to perform the method provided in any one of the second aspect and the possible designs of the second aspect, and/or the second network device is configured to perform the method provided in any one of the third aspect and the possible designs of the third aspect.

According to a thirteenth aspect, this application provides a communication system. The system includes a first network device and a first access device in a first DC, and a second network device and a second access device in a second DC. The first network device is configured to perform the method provided in any one of the first aspect and the possible designs of the first aspect, the second network device is configured to perform the method provided in any one of the second aspect and the possible designs of the second aspect, and/or the second network device is configured to perform the method provided in any one of the third aspect and the possible designs of the third aspect, the second access device is configured to perform the method provided in any one of the fourth aspect and the possible designs of the fourth aspect, and the first access device is configured to perform the method provided in any one of the fifth aspect and the possible designs of the fifth aspect.

According to a fourteenth aspect, this application provides a computer-readable storage medium. The computer-readable storage medium is a non-volatile computer-readable storage medium, the computer-readable storage medium includes computer program instructions, and when the computer program instructions are executed by a processor, a computing device including a processor, or a computer system, the processor, the computing device including the processor, or the computer system performs the method provided in any one of the first aspect and the possible designs of the first aspect, performs the method provided in any one of the second aspect and the possible designs of the second aspect, performs the method provided in any one of the third aspect and the possible designs of the third aspect, performs the method provided in any one of the fourth aspect and the possible designs of the fourth aspect, or performs the method provided in any one of the fifth aspect and the possible designs of the fifth aspect.

According to a fifteenth aspect, this application provides a computer program product including instructions. When the instructions are run by a processor, a computing device including a processor, or a computer system, the processor, the computing device including the processor, or the computer system is caused to perform the method provided in any one of the first aspect and the possible designs of the first aspect, perform the method provided in any one of the second aspect and the possible designs of the second aspect, perform the method provided in any one of the third aspect and the possible designs of the third aspect, perform the method provided in any one of the fourth aspect and the possible designs of the fourth aspect, or perform the method provided in any one of the fifth aspect and the possible designs of the fifth aspect.

According to a sixteenth aspect, this application provides a chip. The chip includes a processor configured to run program instructions or code, and the chip or a device including the chip may be configured to perform the method provided in any one of the first aspect and the possible designs of the first aspect, perform the method provided in any one of the second aspect and the possible designs of the second aspect, perform the method provided in any one of the third aspect and the possible designs of the third aspect, perform the method provided in any one of the fourth aspect and the possible designs of the fourth aspect, or perform the method provided in any one of the fifth aspect and the possible designs of the fifth aspect.

For example, the chip further includes an input interface, an output interface, and a memory. The input interface, the output interface, the processor, and the memory in the chip are connected through an internal connection path of the chip. The memory in the chip is configured to store program instructions or code run by the processor. The input interface and the output interface in the chip are configured to perform connection and communication between the chip and another chip or device.

It may be understood that any communication apparatus, communication system, computer-readable storage medium, computer program product, chip, or the like provided above may be used in the corresponding method provided above. Therefore, for beneficial effects that can be achieved by the communication apparatus, the communication system, the computer-readable storage medium, the computer program product, the chip, or the like, refer to the beneficial effects in the corresponding method. Details are not described herein again.

In this application, names of the communication apparatus, the communication system, and the like do not constitute a limitation on devices or functional modules. During actual implementation, these devices or functional modules may have other names, provided that functions of the devices or the functional modules are similar to those in this application, which falls within the protection scope of this application.

### BRIEF DESCRIPTION OF DRAWINGS

FIG. 1 is a diagram of DC interconnection;
FIG. 2 is a diagram of an implementation environment of a method according to an embodiment of this application;
FIG. 3 is a diagram of another implementation environment of a method according to an embodiment of this application;
FIG. 4 is a schematic flowchart of a communication method according to an embodiment of this application;
FIG. 5 is a diagram of a mapping rule between a network-side interface and an access-side interface in a first network device according to an embodiment of this application;
FIG. 6 is a diagram of determining a first transmission link according to an embodiment of this application;
FIG. 7 is a schematic flowchart of another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a schematic flowchart of still another communication method according to an embodiment of this application;
FIG. 11 is a diagram of re-determining, in response to a fault of a link between a first network device and a second network device, a transmission link that is used to forward traffic to a first access device and that is between the first network device and the second network device according to an embodiment of this application;
FIG. 12 is a diagram of a method according to an embodiment of this application;
FIG. 13 is another diagram of a method according to an embodiment of this application;
FIG. 14 is still another diagram of a method according to an embodiment of this application;
FIG. 15 is still another diagram of a method according to an embodiment of this application;
FIG. 16 is a diagram of a structure of a communication apparatus according to an embodiment of this application;
FIG. 17 is a diagram of a structure of another communication apparatus according to an embodiment of this application;
FIG. 18 is a diagram of a structure of still another communication apparatus according to an embodiment of this application;
FIG. 19 is a diagram of a structure of still another communication apparatus according to an embodiment of this application;
FIG. 20 is a diagram of a structure of still another communication apparatus according to an embodiment of this application; and
FIG. 21 is a diagram of a structure of a network device according to an embodiment of this application.

### DESCRIPTION OF EMBODIMENTS

To make the objectives, technical solutions, and advantages of this application clearer, the following further describes implementations of this application in detail with reference to the accompanying drawings.

In a scenario in which a single DC cannot meet a requirement of a service (such as an AI training service), a plurality of DCs need to be interconnected to provide parallel computation paths for the service to meet the requirement of the service on a computation path scale.

In a scenario in which DCs are directly connected via a Spine (Spine) switch, a DC architecture usually includes a Spine switch, a TOR switch, a server, and a storage device. The Spine switch is an aggregation switch, and is configured to connect all access switches and provide full-mesh (full mesh) interconnection. The TOR switch is also referred to as a Leaf (leaf) switch. The TOR switch usually serves as an access switch to be connected to the server and the storage device and connects the server and the storage device to the Spine switch.

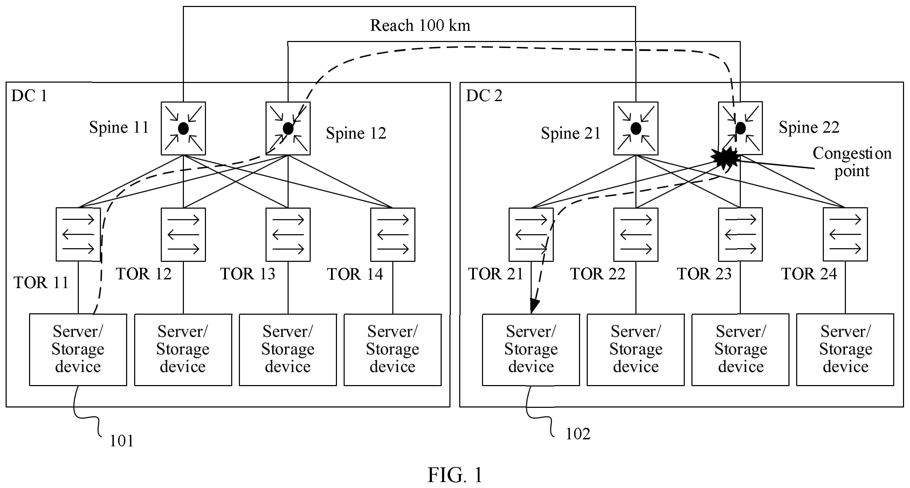

FIG. 1 is a diagram of DC interconnection. As shown in FIG. 1, a DC 1 includes two Spine switches: Spine 11 and Spine 12, and the DC 1 further includes four TOR switches: TOR 11 to TOR 14. A DC 2 includes two Spine switches: Spine 21 and Spine 22, and the DC 2 further includes four TOR switches: TOR 21 to TOR 24. Spine 11 is connected to Spine 21, and Spine 12 is connected to Spine 22. In addition, the Spine switches in the DC 1 are fully meshed with the TOR switches, and the Spine switches in the DC 2 are also fully meshed with the TOR switches. In this way, a server/storage device 101 in the DC 1 may communicate with a server/storage device 102 in the DC 2 via TOR 11, Spine 12, Spine 22, and TOR 21. When the server/storage device 101 sends traffic to the server/storage device 102 via TOR 11, Spine 12, Spine 22, and TOR 21, if a fault occurs on a link between Spine 22 and TOR 21, a traffic congestion point is formed on Spine 22.

In this case, Spine 22 sends a backpressure control packet to Spine 12, to indicate Spine 12 to stop or slow down traffic sending. After receiving the backpressure control packet, Spine 12 further sends a backpressure control packet to the upstream device TOR 11, to indicate TOR 11 to stop or slow down traffic sending. After receiving the backpressure control packet, TOR 11 further sends a backpressure control packet to the server/storage device 101, to indicate the server/storage device 101 to stop or slow down traffic sending. In this way, a backpressure control packet is sent level by level to an upstream device that sends traffic, so that traffic congestion of Spine 22 can be resolved, and zero packet loss can be implemented. Subsequently, after the traffic congestion problem of Spine 22 is resolved, Spine 22 sends a resume packet (for example, a resume frame (resume frame)) to Spine 12, to indicate Spine 12 to resume normal sending of traffic. Similarly, after receiving the resume packet, Spine 12 sends a resume packet to TOR 11. After receiving the resume packet, TOR 11 further sends a resume packet to the server/storage device 101. In this way, both TOR 11 and the server/storage device 101 resume normal sending of traffic. This process is a backpressure control mechanism used to resolve the traffic congestion problem.

However, if the link between Spine 22 and TOR 21 does not recover from the fault in this case, a traffic congestion point is formed again on Spine 22. Therefore, Spine 22 needs to enable the backpressure control mechanism again to alleviate traffic congestion. In other words, when the traffic congestion problem is resolved by using the backpressure control mechanism, before the link between Spine 22 and TOR 21 recovers from the fault, traffic congestion repeatedly occurs on Spine 22. Therefore, Spine 22 needs to repeatedly enable the backpressure control mechanism to resolve traffic congestion. That is, each time traffic congestion occurs on Spine 22, the backpressure control mechanism needs to be enabled once to resolve traffic congestion.

In addition, if a physical distance between the DC 1 and the DC 2 is long, for example, reaches 100 kilometers (that is, 100 kilometers (kilometer, km)), a communication delay between the DCs reaches a millisecond (millisecond, ms) level. In this way, the backpressure control packet sent by Spine 22 can reach Spine 12 only after a millisecond-level time window. However, in the millisecond-level time window, Spine 12 further continuously sends traffic to Spine 22, and the traffic causes overflowing of a receiving buffer of Spine 22, that is, a packet loss occurs on Spine 22. With reference to the foregoing technical problem that before the link between Spine 22 and TOR 21 recovers from the fault, Spine 22 needs to repeatedly enable the backpressure control mechanism to resolve traffic congestion, a packet loss problem occurs each time Spine 22 enables the backpressure control mechanism, that is, before the link between Spine 22 and TOR 21 recovers from the fault, the packet loss problem repeatedly occurs on Spine 22.

To enable Spine 22 to buffer the traffic (referred to as an inflight (inflight) packet) that is continuously sent by Spine 12 to Spine 22 in the millisecond-level time window, in a related technology, a device with a large receiving buffer (such as a Spine switch or a router with a large receiving buffer) is used between DCs to buffer the inflight packet. Therefore, even if traffic congestion repeatedly occurs on Spine 22 before the link between Spine 22 and TOR 21 recovers from the fault, no packet loss occurs on Spine 22. However, the device with the large receiving buffer increases network interconnection costs.

Based on this, an embodiment of this application provides a communication method. The method is applied to a scenario in which a first DC and a second DC are interconnected. In the method, when a transmission link (for example, a first transmission link) that is used to forward traffic to an access device in the first DC and that is between the first DC and the second DC is determined, a total bandwidth of normal links between the access device and a network device in the first DC is considered. In this way, it can be ensured that a total bandwidth of the first transmission link is not greater than the total bandwidth of the normal links between the access device and the network device in the first DC. In this way, it can be ensured that traffic congestion does not occur on the first DC.

In addition, when a fault occurs on a link between the access device and the network device in the first DC, according to the method provided in this embodiment of this application, a network device in the second DC can adjust, in a timely manner with reference to the total bandwidth of the current normal links between the access device and the network device in the first DC, the transmission link that is used to forward the traffic to the access device in the first DC and that is between the first DC and the second DC. In this way, it can be ensured that traffic congestion caused by the link fault occurs on the first DC at most once before the link recovers from the fault, and traffic congestion does not occur on the first DC after the traffic congestion is alleviated this time and before the link recovers from the fault. Therefore, by using the method, when the fault occurs on the link between the access device and the network device in the first DC, the network device in the first DC enables a backpressure control mechanism at most once to alleviate first time of traffic congestion caused by the link fault in the first DC, so that a traffic packet loss of the network device can be mitigated in this embodiment of this application.

The first DC includes a plurality of access devices and a plurality of network devices, and the second DC includes a plurality of access devices and a plurality of network devices. The access device is a switching device connected to a server or a storage device in a DC, for example, a TOR switch. The network device is a network device (also referred to as an aggregation device), in the DC, configured to connect to an access device and an external device of the DC, for example, a Spine switch.

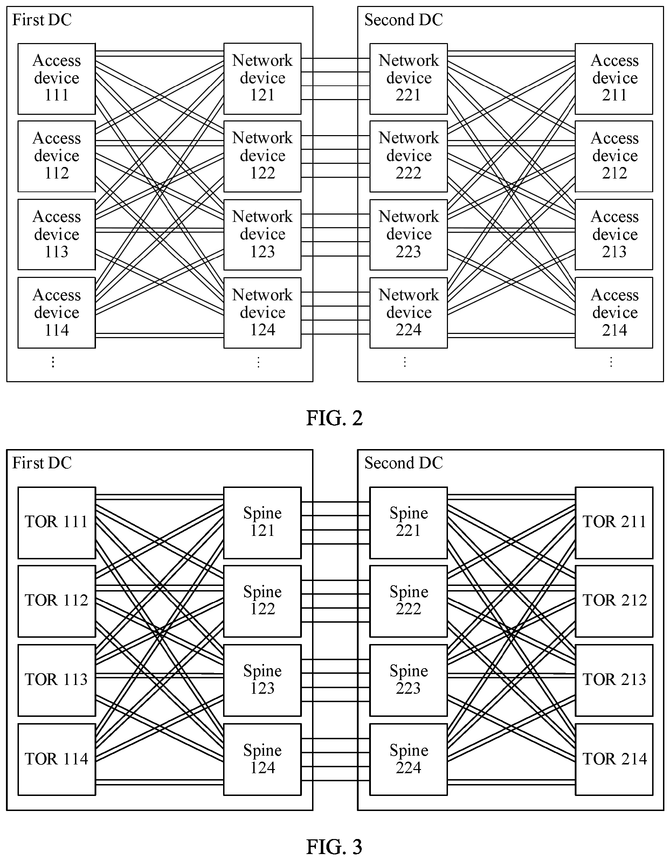

FIG. 2 is a diagram of an implementation environment of a method according to an embodiment of this application. As shown in FIG. 2, the implementation environment includes a first DC and a second DC that are interconnected.

The first DC includes a plurality of access devices and a plurality of network devices that are fully meshed. The plurality of access devices include the access device 111 to the access device 114 shown in FIG. 2, and the plurality of network devices include the network device 121 to the network device 124 shown in FIG. 2. For any access device in the plurality of access devices, for example, a first access device, there is at least one link between the first access device and any network device (for example, a first network device) in the plurality of network devices. For example, there are two links shown in FIG. 2 between the access device 111 and the network device 121. The two links may be used to perform load sharing (equal cost multi path, ECMP) when traffic is transmitted between the access device 111 and the network device 121, that is, the two links may be referred to as load sharing links between the access device 111 and the network device 121. For another example, there are two links shown in FIG. 2 between the access device 111 and the network device 122, and the two links may be used to perform ECMP when traffic is transmitted between the access device 111 and the network device 122. For still another example, there are two links shown in FIG. 2 between the access device 111 and the network device 123, and the two links may be used to perform ECMP when traffic is transmitted between the access device 111 and the network device 123. For still another example, there are two links shown in FIG. 2 between the access device 111 and the network device 124, and the two links may be used to perform ECMP when traffic is transmitted between the access device 111 and the network device 124.

The second DC includes a plurality of access devices and a plurality of network devices that are fully meshed. The plurality of access devices include the access device 211 to the access device 214 shown in FIG. 2, and the plurality of network devices include the network device 221 to the network device 224 shown in FIG. 2. For any access device in the plurality of access devices, for example, a second access device, there is at least one link between the second access device and any network device (for example, a second network device) in the plurality of network devices. For example, there are two links between the access device 211 and the network device 221. The two links may be used to perform ECMP on traffic when traffic is mutually transmitted between the access device 211 and the network device 221, that is, the two links may be referred to as load sharing links between the access device 211 and the network device 221. For another example, there are two links shown in FIG. 2 between the access device 211 and the network device 222, and the two links may be used to perform ECMP when traffic is transmitted between the access device 211 and the network device 222. For still another example, there are two links shown in FIG. 2 between the access device 211 and the network device 223, and the two links may be used to perform ECMP when traffic is transmitted between the access device 211 and the network device 223. For still another example, there are two links shown in FIG. 2 between the access device 211 and the network device 224, and the two links may be used to perform ECMP when traffic is transmitted between the access device 211 and the network device 224.

It may be understood that the access device in the first DC is configured to connect to a server/storage device in the first DC, and each access device may be connected to servers/storage devices with a plurality of internet protocol (internet protocol, IP) addresses or a plurality of IP network segments. Therefore, when the first access device in the first DC is connected to servers/storage devices with a plurality of IP addresses or a plurality of IP network segments, the first access device needs to advertise local routes of the plurality of IP addresses or IP network segments connected to the first access device. Similarly, the access device in the second DC is configured to connect to a server/storage device in the second DC, and each access device may be connected to servers/storage devices with a plurality of IP addresses or a plurality of IP network segments. Therefore, when the second access device in the second DC is connected to servers/storage devices with a plurality of IP addresses or a plurality of IP network segments, the second access device needs to advertise local routes of the plurality of IP addresses or IP network segments connected to the second access device. A protocol used by the access device in the first DC/second DC to advertise a route is not limited in this embodiment of this application. For example, the access device in the first DC/second DC may use the BGP to advertise the route. Specifically, the access device in the first DC/second DC may use an update (Update) message (that is, a BGP update message) in the BGP to advertise the route.

It may be further understood that in any DC shown in FIG. 2, there may be at least one relay forwarding node (such as a switch or a router) between the access device and the network device. Certainly, the access device and the network device in any DC shown in FIG. 2 may alternatively be directly connected. This is not limited in this embodiment of this application.

Still refer to FIG. 2. The first DC and the second DC are connected and communicate with each other via respective network devices. There may be at least one relay forwarding node (such as a switch or a router) between the network device in the first DC and the network device in the second DC. Certainly, the network device in the first DC may alternatively be directly connected to the network device in the second DC. This is not limited in this embodiment of this application.

In addition, there may be a plurality of links between the network device in the first DC and the network device in the second DC. For example, there are four links between the network device 121 and the network device 221, there are four links between the network device 122 and the network device 222, there are four links between the network device 123 and the network device 223, and there are four links between the network device 124 and the network device 224. It should be understood that, for any network device in the first DC, for example, the network device 121, the four links between the network device 121 and the network device 221 in the second DC may be used to perform ECMP on traffic when traffic is mutually transmitted between the network device 121 and the network device 221. In other words, the four links may be referred to as load sharing links between the network device 121 and the network device 221.

Optionally, in the DC (for example, the first DC/second DC), a peer (peer) relationship exists between network devices. Because an access device in the DC may be connected to a plurality of network devices, an access device (for example, the first access device) in the first DC may forward traffic to an access device (for example, the second access device) in the second DC via the plurality of network devices connected to the first access device. In other words, there may be a plurality of paths (path) that are between the first access device and the second access device and that are used to forward traffic through a plurality of network devices in the first DC and network devices, in the second DC, connected to the plurality of network devices, and the plurality of paths are ECMP paths. Herein, the path refers to an end-to-end (end-to-end) communication path, and end-to-end usually involves traffic forwarding of a plurality of network nodes. Different from the path, a link is usually a point-to-point (point-to-point) traffic transmission channel, and point-to-point is usually two nodes directly connected.

For example, as shown in FIG. 2, a forwarding path 1 that passes through the network device 121 and the network device 221, a forwarding path 2 that passes through the network device 122 and the network device 222, a forwarding path 3 that passes through the network device 123 and the network device 223, and a forwarding path 4 that passes through the network device 124 and the network device 224 are included between the access device 111 in the first DC and the access device 211 in the second DC, and the forwarding path 1 to the forwarding path 4 are used to perform ECMP between the access device 111 and the access device 211.

It may be understood that there may be at least one relay forwarding node (such as a switch or a router) between the network device in the first DC and the network device in the second DC shown in FIG. 2. Certainly, the network device in the first DC may alternatively be directly connected to the network device in the second DC. This is not limited in this embodiment of this application.

For brief description, in this embodiment of this application, an example in which the access device and the network device in the DC are directly connected and the network device in the first DC is also directly connected to the network device in the second DC is used below for description. In other words, in the following descriptions of this embodiment of this application, there is no relay forwarding node between the access device and the network device in the DC, and there is no relay forwarding node between the network device in the first DC and the network device in the second DC.

It can be learned that in this embodiment of this application, when the access device and the network device in the DC are directly connected and the network device in the first DC is also directly connected to the network device in the second DC, a network-side interface of the network device in the first DC is configured to connect to the access device in the first DC, and the network-side interface of the network device is configured to connect to the network device in the second DC.

It can be further learned that the architecture of the data center shown in FIG. 2 is a Leaf-Spine (leaf-spine) architecture.

The method in embodiments of this application is applied to the access device in the first DC shown in FIG. 2, the network device connected to the access device, the network device, in the second DC, connected to the network device, and the access device, in the second DC, connected to the network device, to ensure that when traffic is transmitted from the second DC to the first DC, traffic congestion is avoided in the first DC, and ensure that when a fault occurs on a link in the first DC, a traffic congestion point is moved forward to the second DC that sends the traffic. In this way, a packet loss caused by enabling a backpressure control mechanism when traffic congestion occurs can be mitigated. For detailed descriptions, refer to descriptions of the following method embodiments. Details are not described herein.

In an example embodiment, an example in which the access device is a TOR switch and the network device is a Spine switch is used. FIG. 3 is a diagram of another implementation environment of a method according to an embodiment of this application.

As shown in FIG. 3, a first DC in the implementation environment includes four TOR switches, for example, TOR 111 to TOR 114 shown in FIG. 3, and includes four Spine switches, for example, Spine 121 to Spine 124 shown in FIG. 3. TOR 111 to TOR 114 and Spine 121 to Spine 124 are fully meshed, and there are two links between each TOR switch and each Spine switch, for example, two links between TOR 111 and Spine 121 shown in FIG. 3, two links between TOR 111 and Spine 122 shown in FIG. 3, two links between TOR 111 and Spine 123 shown in FIG. 3, and two links between TOR 111 and Spine 124 shown in FIG. 3.

A second DC in the implementation environment shown in FIG. 3 includes four TOR switches, for example, TOR 211 to TOR 214 shown in FIG. 3, and includes four Spine switches, for example, Spine 221 to Spine 224 shown in FIG. 3. TOR 211 to TOR 214 and Spine 221 to Spine 224 are fully meshed, and there are two links between each TOR switch and each Spine switch, for example, two links between TOR 211 and Spine 221 shown in FIG. 3, two links between TOR 211 and Spine 222 shown in FIG. 3, two links between TOR 211 and Spine 223 shown in FIG. 3, and two links between TOR 211 and Spine 224 shown in FIG. 3.

In addition, there are four links between the Spine switch in the first DC and the Spine switch in the second DC. In this way, the method in embodiments of this application is applied to the TOR switch in the first DC shown in FIG. 3, the Spine switch connected to the TOR switch, the Spine switch, in the second DC, connected to the Spine switch, and the TOR switch, in the second DC, connected to the Spine switch, to ensure that when traffic is transmitted from the second DC to the first DC, traffic congestion is avoided in the first DC, and ensure that when a fault occurs on a link in the first DC, a traffic congestion point is moved forward to the second DC that sends the traffic. In this way, a packet loss caused by enabling a backpressure control mechanism when traffic congestion occurs can be mitigated. For detailed descriptions, refer to descriptions of the following method embodiments. Details are not described herein.

It should be understood that the foregoing content is an example description of an implementation scenario of the method provided in this embodiment of this application, and does not constitute a limitation on the implementation environment of the method. Persons of ordinary skill in the art may learn that as a service requirement changes, the implementation environment of the method may be adjusted based on an application requirement. This is not enumerated in this embodiment of this application.

An embodiment of this application further provides a communication apparatus. The communication apparatus may be used for the access device or the network device in the foregoing implementation environment, and is configured to perform the method in embodiments of this application, to ensure that when traffic is transmitted from a second DC to a first DC, traffic congestion is avoided in the first DC, and ensure that when a fault occurs on a link in the first DC, a traffic congestion point is moved forward to the second DC that sends the traffic. In this way, a packet loss caused by enabling a backpressure control mechanism when traffic congestion occurs is mitigated. For detailed descriptions, refer to descriptions of the following method embodiments. Details are not described herein.

Optionally, the communication apparatus may be implemented as any device having a traffic forwarding capability or a functional module in the device. The device includes but is not limited to an access switch (for example, a TOR switch), an aggregation switch (for example, a Spine switch), and the like.

The following describes, with reference to the accompanying drawings, an implementation process of a communication method provided in embodiments of this application.

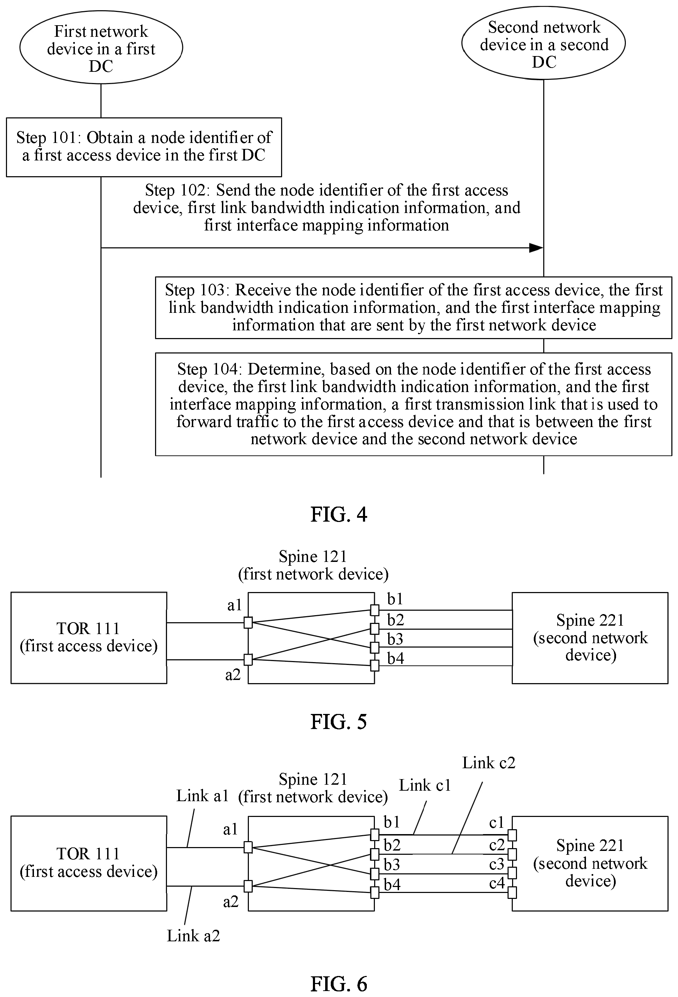

FIG. 4 is a schematic flowchart of a communication method according to an embodiment of this application. Optionally, the method may be applied to the implementation environment shown in FIG. 2 or FIG. 3. The method is applied to the implementation environment shown in FIG. 2, and an access device and a network device in a first DC and a network device in a second DC in the implementation environment perform corresponding steps. As shown in FIG. 4, the method includes the following step 101 to step 104.

Step 101: A first network device in the first DC obtains a node identifier of a first access device in the first DC.

The first network device is any network device in the first DC, and the first access device is any access device that is in the first DC and that is connected to the first network device. For example, the first network device is the network device 121 shown in FIG. 2, and the first access device is the access device 111 shown in FIG. 2. For another example, the first network device is Spine 121 shown in FIG. 3, and the first access device is TOR 111 shown in FIG. 3. For still another example, the first network device is the Spine 12 shown in FIG. 1, and the first access device is TOR 11 shown in FIG. 1.

The node identifier of the first access device is used to uniquely identify the first access device in all domains of the first DC and the second DC. For example, the node identifier of the first access device may include but is not limited to an ID of the first access device or a loopback (loopback) address of the first access device. In an example, the ID of the first access device may be a code set for the first access device in all the domains, and the code may be formed by one or more of a digit, a letter, or another character. In another example, the ID of the first access device may be a medium access control (medium access control, MAC) address of the first access device.

In an example embodiment, the first network device may obtain the node identifier of the first access device in either of the following two manners.

Manner 1: The first network device receives a first BGP update message sent by the first access device, where the first BGP update message carries the node identifier of the first access device.

The first BGP update message may carry the node identifier of the first access device by reusing an extended community attribute, using a new attribute, or using a new extended attribute. For example, the first BGP update may carry the node identifier of the first access device by reusing a field in which an extended community attribute "site of origin (site of origin)" is located.

It may be understood that in a BGP update message, a routing feature and a policy are usually described by using an attribute (attributes), and the attribute may include a standard attribute (standard attributes) and a community attribute (community attributes). To carry more information, the BGP update message may further include an extended attribute (extended attributes), and the extended attribute includes an extended community attribute (extended community attributes). Therefore, in this embodiment of this application, in addition to reusing the field in which the existing extended community attribute "site of origin (site of origin)" is located to carry the node identifier of the first access device, a field for a new attribute or a new community attribute may be defined to carry the node identifier of the first access device. In other words, the first BGP update message may carry the node identifier of the first access device by using the field in which the new attribute or the new community attribute is located.

Optionally, after establishing a BGP peer relationship with the first network device, the first access device may send, on each link between the first access device and the first network device, the first BGP update message that carries the node identifier of the first access device, to advertise a local route. In response, the first network device may receive, through each access-side interface connected to the first access device, one first BGP update message that carries the node identifier of the first access device. For example, with reference to FIG. 2, there are two links between the access device 111 and the network device 121. When advertising a local route, the access device 111 may send, on each of the two links, one BGP update message that carries the node identifier of the first access device, that is, the access device 111 sends, on the two links, two BGP update messages that carry the node identifier of the first access device. In response, the network device 121 receives, through each of two access-side interfaces connected to the access device 111, one BGP update message that carries the node identifier of the first access device, that is, the network device 121 receives, on the two links, two BGP update messages that carry the node identifier of the first access device.

Optionally, after a link between the first access device and the first network device is configured as a link aggregation group, and the first access device and the first network device establish a BGP peer relationship based on the link aggregation group (that is, a logical link), the first access device may send, on any link (that is, any physical link in the logical link) between the first access device and the first network device, the first BGP update message that carries the node identifier of the first access device, to advertise a local route. In response, the first network device receives the first BGP update message that is sent by the first access device and that carries the node identifier of the first access device.

Manner 2: The first network device receives the node identifier of the first access device sent by the first access device according to the TCP or the UDP.

Optionally, after networking of the first data center, the first access device may establish a TCP connection to the first network device by using a three-way handshake mechanism. Therefore, the first access device may send, through the TCP connection established between the first access device and the first network device, a TCP packet that carries the node identifier of the first access device. In response, the first network device may receive, based on the TCP connection, the TCP packet that carries the node identifier of the first access device, to obtain the node identifier of the first access device.

Optionally, after networking of the first data center, the first access device may construct a UDP packet including the node identifier of the first access device, and send the UDP packet to the first network device. In response, the first network device may receive the UDP packet, and obtain the node identifier of the first access device from the UDP packet.

Step 102: The first network device sends the node identifier of the first access device, first link bandwidth indication information, and first interface mapping information to a second network device in the second DC.

The second network device is a network device, in the second DC, connected to the first network device.

The first link bandwidth indication information indicates a total bandwidth of all normal links that are used to transmit traffic and that are between the first network device and the first access device. The first interface mapping information indicates a mapping relationship between at least one network-side interface and at least one access-side interface in the first network device, the at least one network-side interface is configured to connect to the second network device, and the at least one access-side interface is configured to connect to the first access device.

It should be understood that, before sending the node identifier of the first access device, the first link bandwidth indication information, and the first interface mapping information to the second network device in the second DC, the first network device needs to first collect the first link bandwidth indication information and the first interface mapping information.

For the first link bandwidth indication information, optionally, the first link bandwidth indication information may include one or more of the following: a total bandwidth value of all the normal links, a quantity of all the normal links, or a bandwidth value of at least one of all the normal links.

It may be understood that, when a bandwidth of each link between devices in the first DC and the second DC has a default value (for example, 400 gigabits per second (gigabits per second, Gbps), 400 G for short), and the first link bandwidth indication information includes the quantity of all the normal links, the second network device that receives the first link bandwidth indication information may determine the total bandwidth of the normal links based on the quantity and the bandwidth with the default value.

When bandwidths of all links between devices in the first DC and the second DC are the same, and the first link bandwidth indication information includes the quantity of all the normal links and the bandwidth value of the at least one of all the normal links, the second network device that receives the first link bandwidth indication information may determine the total bandwidth of the normal links based on the quantity and the bandwidth value of the at least one link.

Optionally, when the first access device sends, on each link connecting the first access device and the first network device in step 101, the first BGP update message that carries the node identifier of the first access device, the first network device may determine, based on the node identifier carried in the received BGP update message, a quantity of BGP update messages that carry the node identifier of the first access node. The quantity is a quantity of links between the first access device and the first network device. In this case, if the bandwidth of each link between the devices in the first DC and the second DC has a default value, the first network device may further determine the total bandwidth value of all the normal links based on the determined quantity of links and the bandwidth with the default value.

Optionally, when the first access device sends, on the logical link between the first access device and the first network device in step 101, the first BGP update message that carries the node identifier of the first access device, the first network device may determine, by viewing a configuration, a quantity of physical links in a normal state in logical links and a bandwidth of each physical link in the normal state. Optionally, the first network device may further determine the total bandwidth value of all the normal links based on the determined quantity of physical links and the bandwidth of each physical link.

Optionally, when the first access device sends the node identifier of the first access device according to the TCP or the UDP in step 101, the first network device may determine a link between the first network device and the first access device and a quantity of links by querying a network topology and a configuration. Then, the first network device obtains a quantity of links for normal traffic transmission between the first network device and the first access device and a bandwidth of each link. Optionally, the first network device may further determine the total bandwidth value of all the normal links based on the determined quantity of links and the bandwidth of each link.

In this way, the first network device may determine, as the first link bandwidth indication information, one or more of the following information determined in the foregoing several manners: a quantity of all normal links that are used to transmit traffic and that are between the first network device and the first access device, a bandwidth of a single link, a total bandwidth of these links, and the like.

For the first interface mapping information, the first interface mapping information includes identification information of a network-side interface, identification information of an access-side interface, and an interface mapping rule. In this way, the first interface mapping information may indicate the mapping relationship between the network-side interface and the access-side interface in the first network device by using the identification information of the network-side interface, the identification information of the access-side interface, and the interface mapping rule. The network-side interface and the access-side interface are interfaces running normally, and links connected to the interfaces can forward traffic normally.

In an example, the identification information of the network-side interface includes an identifier of each network-side interface in the first network device, and the identification information of the access-side interface includes an identifier of each access-side interface in the first network device. In this case, the first interface mapping information includes the identifier of each network-side interface in the first network device, the identifier of each access-side interface in the first network device, and the interface mapping rule. Herein, the interface mapping rule is a mapping rule between the network-side interface and the access-side interface in the first access device.

Optionally, the mapping rule may be represented by a specific mapping relationship between the network-side interface and the access-side interface. Optionally, the mapping rule may be represented by a mapping algorithm understood by a device, for example, a sequential mapping algorithm, that is, the network-side interface and the access-side interface are sequentially mapped based on interface numbers. Optionally, the mapping rule may be represented by an identifier (for example, a number) that is understood by the device and that is used to identify a mapping algorithm. For example, if the sequential mapping algorithm is represented by a number 1, the mapping rule is the number 1. FIG. 5 is a diagram of a mapping rule between a network-side interface and an access-side interface in a first network device according to an embodiment of this application. With reference to FIG. 3, as shown in FIG. 5, it is assumed that Spine 121 is a first network device, TOR 111 is a first access device, and Spine 221 in a second DC is a second network device. In this case, access-side interfaces that are in the first network device and that are connected to the first access device include an interface a1 and an interface a2, and network-side interfaces that are in the first network device and that are connected to the second network device include an interface b1, an interface b2, an interface b3, and an interface b4. In an implementation, the mapping rule between the network-side interface and the access-side interface in the first network device may be represented as follows: The interface a1 is mapped with the interface b1 and the interface b3, and the interface a2 is mapped with the interface b2 and the interface b4. In another implementation, the mapping rule between the network-side interface and the access-side interface in the first network device may be represented as: performing mapping based on the sequential mapping algorithm or mapping based on the mapping algorithm identified by the number 1. Herein, the mapping rule for performing mapping based on the sequential mapping algorithm is as follows: In the first network device, the network-side interface b1 is mapped with the access-side interface a1, the network-side interface b2 is mapped with the access-side interface a2, the network-side interface b3 is mapped with the access-side interface a1, and the network-side interface b4 is mapped with the access-side interface a2. It should be understood that, by setting the mapping rule between the network-side interface and the access-side interface in Spine 121, Spine 121 may forward traffic from TOR 111 in an ECMP manner, or forward traffic to TOR 111 in an ECMP manner.

In another example, the identification information of the network-side interface includes an identifier of each network-side interface group in the first network device, and one network-side interface group includes at least one network-side interface. The identification information of the access-side interface includes an identifier of each access-side interface group in the first network device, and one access-side interface group includes at least one access-side interface. In this case, the first interface mapping information includes the identifier of each network-side interface group in the first network device, the identifier of each access-side interface group in the first network device, and the interface mapping rule. Herein, the interface mapping rule is a mapping rule between the network-side interface group and the access-side interface group in the first network device. For example, still refer to FIG. 5. If the interface a1 and the interface a2 are an access-side interface group, and are denoted as an access-side interface group 1, the interface b1 and the interface b3 are a network-side interface group, and are denoted as a network-side interface group 1, and the interface b2 and the interface b4 are another network-side interface group, and are denoted as a network-side interface group 2, the mapping rule between the network-side interface group and the access-side interface group in the first network device may be represented as follows: The interfaces in the access-side interface group 1 are mapped with the interfaces in the network-side interface group 1 in a one-to-one manner, and the interfaces in the access-side interface group 1 are mapped with the interfaces in the network-side interface group 2 in a one-to-one manner.

Optionally, the first network device may generate the first interface mapping information by viewing a local mapping relationship between an interface identifier and an interface.

After the first network device determines the first link bandwidth indication information and the first interface mapping information, and receives the node identifier of the first access device sent by the first access device, the first network device sends the node identifier of the first access device, the first link bandwidth indication information, and the first interface mapping information to the second network device.

Optionally, the first network device may send a second BGP update message to the second network device, where the second BGP update message carries the node identifier of the first access device, the first link bandwidth indication information, and the first interface mapping information. For example, the second BGP update message may carry the first link bandwidth indication information by using a new attribute, using a new extended attribute, or reusing an existing extended attribute (for example, an extended attribute "BGP link bandwidth (BGP Link Bandwidth)"). For another example, the second BGP update message carries the first interface mapping information by using a new attribute or a new extended attribute. For descriptions of the new attribute and the new extended attribute, refer to the related descriptions in step 101. Details are not described again.

In a possible implementation, the first network device may send the second BGP update message to the second network device on each link between the first network device and the second network device. For example, when there are four links between the first network device and the second network device, the first network device sends, to the second network device on the four links, four second BGP update messages that carry the node identifier of the first access device, the first link bandwidth indication information, and the first interface mapping information.

Optionally, the first network device may send the node identifier of the first access device, the first link bandwidth indication information, and the first interface mapping information to the second network device according to the TCP or the UDP.

In an example, the first network device may establish a TCP connection to the second network device by using a three-way handshake mechanism, so that the first network device may send, through the TCP connection established between the first network device and the second network device, a TCP packet that carries the node identifier of the first access device, the first link bandwidth indication information, and the first interface mapping information.

In another example, the first network device may construct a UDP packet that includes the node identifier of the first access device, the first link bandwidth indication information, and the first interface mapping information, and send the UDP packet to the second network device.

Step 103: The second network device receives the node identifier of the first access device, the first link bandwidth indication information, and the first interface mapping information that are sent by the first network device.

In a possible implementation, the second network device receives the second BGP update message sent by the first network device, where the second BGP update message carries the node identifier of the first access device, the first link bandwidth indication information, and the first interface mapping information.

In another possible implementation, the second network device receives, according to the TCP or the UDP, the node identifier of the first access device, the first link bandwidth indication information, and the first interface mapping information that are sent by the first network device. For example, the second network device receives the TCP packet or the UDP packet that is sent by the first network device and that carries the node identifier of the first access device, the first link bandwidth indication information, and the first interface mapping information.

Step 104: The second network device determines, based on the node identifier of the first access device, the first link bandwidth indication information, and the first interface mapping information, a first transmission link that is used to forward traffic to the first access device and that is between the first network device and the second network device.

In this embodiment of this application, to ensure that traffic congestion is avoided in the second DC when the second DC sends traffic to the first DC, when determining the first transmission link that is used to forward the traffic to the first access device and that is between the first network device and the second network device, the second network device needs to make a bandwidth of the first transmission link less than or equal to the total bandwidth indicated by the first link bandwidth information. In this way, when the traffic is sent from the second DC to the first DC, the first transmission link is an upstream link (that is, a link close to a traffic source) of the link between the first access device and the first network device corresponding to the first link bandwidth information. Correspondingly, the link between the first access device and the first network device corresponding to the first link bandwidth information is a downstream link (that is, a link close to a traffic destination) of the first transmission link. Therefore, when an upstream link bandwidth is less than or equal to a downstream link bandwidth, it can be ensured that traffic congestion does not occur in the DC in which the downstream link is located.

In a first possible implementation, when the second network device receives the node identifier of the first access device, the first link bandwidth indication information, and the first interface mapping information by using the second BGP update message, the second network device learns, based on the second BGP update message, a route for forwarding traffic to the first access device, and when determining a specific transmission link based on the learned route, complies with the following three conditions:
Condition 1: The transmission link is determined by using an access device in the first DC as a granularity. Because the first network device in the first DC is connected to a plurality of access devices (including the first access device) in the first DC, the first network device sends, to the second network device, an identifier of each access device connected to the first network device, link bandwidth indication information indicating a total bandwidth of all normal links between each access device and the first network device, and first interface mapping information. Therefore, the second network device needs to determine, based on the node identifier of the access device carried in the received information and by using the access device represented by the node identifier as a granularity, a transmission link that is used to forward traffic to each access device in the first DC and that is between the first network device and the second network device.
Condition 2: For the first access device, after learning, based on the second BGP update message, the route for forwarding the traffic to the first access device, the second network device determines the total bandwidth of the first transmission link based on information carried in the first link bandwidth indication information, to ensure that the total bandwidth of the first transmission link is less than or equal to the total bandwidth indicated by the first link bandwidth indication information. Optionally, if the first link bandwidth indication information carries the quantity of links and the bandwidth of the single link, the second network device may plan, in a fine granularity manner based on the quantity of links and the bandwidth of the single link that are carried in the first link bandwidth indication information, a quantity of links included in the first transmission link that is used to forward the traffic to the first access device and that is between the first network device and the second network device and a bandwidth of each link.
Condition 3: After determining the quantity of links included in the first transmission link, the second network device needs to determine, in the second network device based on the first interface mapping information, an interface of each link in the first transmission link, where the interface is a network-side interface of the second network device. It should be understood that in the condition, the second network device has obtained a network-side interface, of the first network device, that is connected to each network-side interface of the second network device. In this way, when the second network device selects an interface in the second network device for each link in the first transmission link based on the first interface mapping information, a case in which after traffic reaches the first network device through the first transmission link, the traffic from the first transmission link is forwarded by the first network device to a same link between the first network device and the first access device based on the mapping relationship between the network-side interface and the access-side interface in the first network device needs to be avoided. In this way, congestion can be avoided on the first network device. For example, with reference to FIG. 5, FIG. 6 is a diagram of determining a first transmission link according to an embodiment of this application. If the first network device is Spine 121 in the first DC, the first access device is TOR 111 in the first DC, the second network device is Spine 221 in the second DC, and the mapping relationship that is between the network-side interface and the access-side interface in the first network device and that is indicated by the first interface mapping information is shown in FIG. 6, when the first transmission link determined by the second network device based on the first link bandwidth indication information includes two links between the first network device and the second network device, the second network device may determine a link c1 on which a network-side interface c1 is located and a link c2 on which a network-side interface c2 is located as the first transmission link, that is, the first transmission link includes the link c1 and the link c2. In this way, after traffic of the second DC reaches the first network device through the link c1, based on the mapping relationship between the network-side interface and the access-side interface in the first network device, the traffic of the link c1 may reach a link a1 through the interface b1 and the interface a1 of the first network device for transmission. After traffic of the second DC reaches the first network device through the link c2, based on the mapping relationship between the network-side interface and the access-side interface in the first network device, the traffic of the link c2 may reach a link a2 through the interface b2 and the interface a2 of the first network device for transmission. It can be learned that after the traffic sent by the second DC to the first DC is forwarded to the first network device through different links in the first transmission link, the first network device may distribute the traffic to different links between the first network device and the first access device, to ensure that traffic congestion does not occur on the first network device.

In a second possible implementation, when the second network device receives the node identifier of the first access device, the first link bandwidth indication information, and the first interface mapping information according to the TCP or the UDP, after receiving the BGP update message that is sent by the first network device and that carries the node identifier of the first access device, and learning, based on the received BGP update message, a route for forwarding traffic to the first access device, the second network device may determine the first transmission link based on the learned route, the node identifier of the first access device, the first link bandwidth indication information, the first interface mapping information, and the foregoing three conditions. For detailed descriptions, refer to the foregoing descriptions of determining the first transmission link in the first possible implementation. Details are not described again.

In this way, based on the method described in step 101 to step 104, in this embodiment of this application, when the first access device in the first DC advertises the BGP update message to the second DC, the second network device in the second DC determines, based on the node identifier of the first access device, the total bandwidth of all the normal links between the first access device and the first network device in the first DC, and the mapping relationship between the network-side interface and the access-side interface in the first network device, the first transmission link that is used to forward the traffic to the first access device and that is between the first network device and the second network device. In this embodiment of this application, when the second network device determines the first transmission link, the total bandwidth of all the normal links between the first access device and the first network device in the first DC is considered, and the mapping relationship between the network-side interface and the access-side interface in the first network device is considered. Therefore, it can be ensured that traffic congestion does not occur on the first network device when the second DC forwards traffic to the first access device on the first transmission link, so that the first network device does not enable a backpressure control mechanism to alleviate congestion, and a case in which a packet loss occurs on the first network device when the first network device enables the backpressure control mechanism is further avoided. Herein, when the first network device enables the backpressure control mechanism, a packet loss occurs on the first network device because a distance between the second DC for sending traffic and the first DC for receiving traffic is long. As a result, a backpressure control packet needs a long time window to reach an upstream device (that is, a device that sends traffic to the first network device) of the first network device, and the first network device on which congestion has occurred in the time window further continuously receives traffic sent by the first DC. When traffic received by the first network device exceeds a size of a receiving buffer, a packet loss occurs on the first network device. In other words, in the solution in this embodiment of this application, a possibility of traffic congestion can be moved forward to the second network device that sends traffic to the first access device.

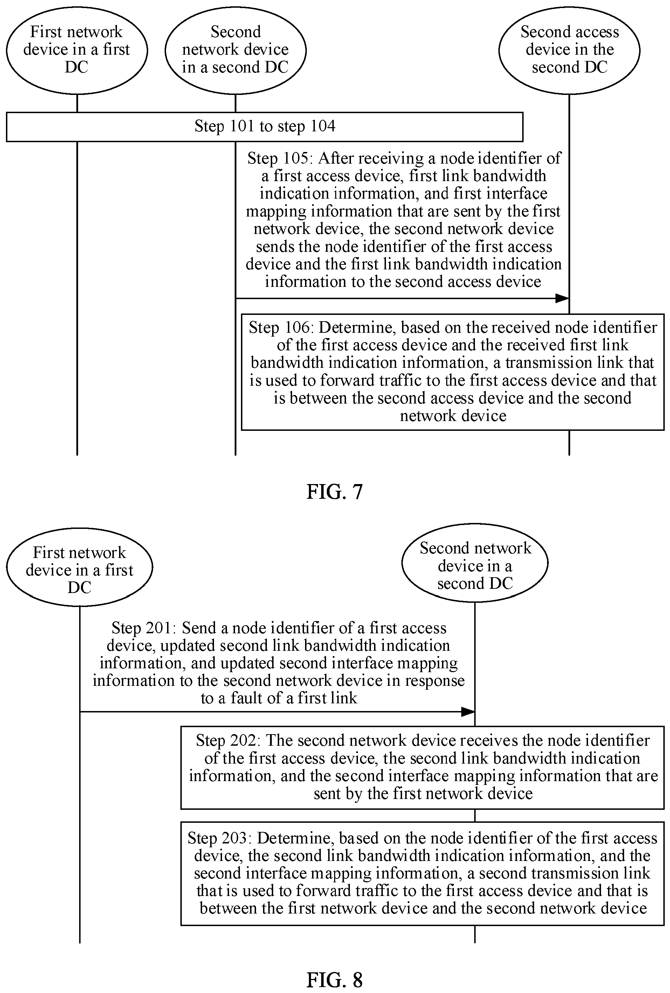

In some other embodiments, with reference to FIG. 4, FIG. 7 is a schematic flowchart of another communication method according to an embodiment of this application. Optionally, the method may be applied to the implementation environment shown in FIG. 2 or FIG. 3. The method is applied to the implementation environment shown in FIG. 2, and an access device and a network device in a first DC and a network device and an access device in a second DC in the implementation environment perform corresponding steps. As shown in FIG. 7, in the method, after step 101 to step 104 are performed, the following step 105 and step 106 are performed.

Step 105: After receiving a node identifier of a first access device, first link bandwidth indication information, and first interface mapping information that are sent by a first network device, a second network device sends the node identifier of the first access device and the first link bandwidth indication information to a second access device.

The second access device is an access device that is in the second DC and that sends traffic to the second network device. Alternatively, it is understood as that the second access device is any access device that is in the second DC and that is connected to the second network device.

Optionally, the second network device may send a third BGP update message to the second access device, where the third BGP update message carries the node identifier of the first access device and the first link bandwidth indication information.

In an example, the third BGP update message may carry the node identifier of the first access device by reusing an extended community attribute (for example, an extended community attribute "site of origin (site of origin)"), using a new attribute, or using a new extended attribute.

In another example, the third BGP update message may carry the first link bandwidth indication information by using a new attribute, using a new extended attribute, or reusing an existing extended attribute (for example, an extended attribute "BGP link bandwidth (BGP Link Bandwidth)").

Optionally, the second network device may send the node identifier of the first access device and the first link bandwidth indication information to the second access device according to the TCP or the UDP.

Step 106: The second access device determines, based on the received node identifier of the first access device and the received first link bandwidth indication information, a transmission link that is used to forward traffic to the first access device and that is between the second access device and the second network device.

Optionally, when the second access device receives, based on the third BGP update message, the node identifier of the first access device and the first link bandwidth indication information, the second access device learns, based on the third BGP update message, a route for forwarding traffic to the first access device, and determines, based on the learned route, the node identifier of the first access device, the first link bandwidth indication information, and the condition 1 and the condition 2 described above, the transmission link that is used to forward the traffic to the first access device and that is between the second access device and the second network device. In addition, a total bandwidth of the transmission link determined by the second access device in this manner is less than or equal to a total bandwidth indicated by the first link bandwidth indication information. For this process, refer to the related descriptions in the foregoing first possible implementation. Details are not described again.

For example, with reference to FIG. 3, when the first access device is TOR 111, the first network device is Spine 121, the second network device is Spine 221, the second access device is TOR 211, and a bandwidth of any single link between the first DC and the second DC is 400 G, if a total bandwidth of all normal links between TOR 111 and Spine 121 indicated by the first link bandwidth indication information is 800 G, and a quantity of links is 2, the second access device (that is, TOR 211) may determine that a transmission link that is used to forward traffic to TOR 111 and that is between TOR 211 and Spine 221 may be one link with a bandwidth of 400 G (which complies with the condition 3). Alternatively, TOR 211 may determine that a transmission link that is used to forward traffic to TOR 111 and that is between TOR 211 and Spine 221 may be two links whose bandwidth of a single link is 400 G, that is, a total bandwidth is 800 G (which complies with the condition 3).

Optionally, when the second access device receives, according to the TCP or the UDP, the node identifier of the first access device and the first link bandwidth indication information, the second access device needs to first learn, based on the BGP update message sent by the second network device, a route for forwarding traffic to the first access device. Then, the second access device may determine, based on the learned route for forwarding the traffic to the first access device, the node identifier of the first access device, the first link bandwidth indication information, and the condition 1 and the condition 2 described above, the transmission link that is used to forward the traffic to the first access device and that is between the second access device and the second network device. In addition, a total bandwidth of the transmission link determined by the second access device in this manner is less than or equal to a total bandwidth indicated by the first link bandwidth indication information. For this process, refer to the related descriptions in the foregoing first possible implementation. Details are not described again.

In this way, in this embodiment of this application, when the transmission link that is used to forward the traffic to the first access device and that is between the second access device and the second network device is determined, the total bandwidth of all normal links between the first access device and the first network device in the first DC is considered. Therefore, it can be ensured that when the second DC forwards traffic to the first access device on the transmission link determined by the second access device and the first transmission link determined by the second network device, traffic congestion does not occur on the first network device and the second network device, so that the first network device does not enable a backpressure control mechanism to alleviate congestion, and a case in which a packet loss occurs on the first network device when the first network device enables the backpressure control mechanism is further avoided. In other words, in the solution in this embodiment of this application, a location at which traffic congestion occurs can be moved forward to the second access device that sends traffic to the first access device.

To deepen understanding of the solutions in embodiments of this application, the following further describes the solutions provided in embodiments of this application with reference to a specific fault scenario.

In embodiments of this application, after a transmission link between an access device and a network device in a first DC and a second DC is configured based on the solution in FIG. 4 or FIG. 7, and a transmission link between network devices used to connect the first DC and the second DC is configured based on the solution in FIG. 4 or FIG. 7, when the first DC and the second DC send traffic to each other based on the configuration, traffic congestion usually does not occur in a DC in which a traffic receive end is located. However, if a fault occurs on a link in the DC in which the traffic receive end is located, the fault causes traffic congestion in the DC in which the traffic receive end is located.

An example in which a second access device in the second DC sends traffic to a first access device in the first DC, and a fault occurs on a first link in the first DC in which the traffic receive end is located. FIG. 8 is a schematic flowchart of still another communication method according to an embodiment of this application. Optionally, the method may be applied to the implementation environment shown in FIG. 2 or FIG. 3. The method is applied to the implementation environment shown in FIG. 2, and the access device and the network device in the first DC and the network device in the second DC in the implementation environment perform corresponding steps. The first link is one of all links that are used to originally transmit traffic normally between the first access device and a first network device. That is, all the links that are used to originally transmit the traffic normally between the first access device and the first network device include a plurality of links, and the plurality of links include the first link. As shown in FIG. 8, the method includes the following step 201 to step 203.

Step 201: The first network device sends a node identifier of the first access device, updated second link bandwidth indication information, and updated second interface mapping information to a second network device in response to a fault that occurs on the first link.

When the first network device detects that the fault occurs on the first link, the first network device may determine the updated second link bandwidth indication information based on a remaining normal link between the first access device and the first network device. The updated second link bandwidth indication information is link bandwidth indication information determined by the first network device based on the remaining normal link. A specific implementation in which the first network device perceives that the fault occurs on the first link is not specifically limited in this embodiment of this application.

In addition, because the fault occurs on the first link, an interface of the first link in the first network device no longer receives traffic forwarded by a network-side interface of the first network device. Therefore, the first network device may determine the updated second interface mapping information based on the interface of the first link in the first network device, and the updated second interface mapping information indicates a mapping relationship obtained after a mapping relationship including the interface of the first link in the first network device is removed from a mapping relationship between a network-side interface that normally runs and an access-side interface that normally runs in the first network device before the fault occurs on the first link.

Optionally, the first network device may send a BGP update message to the second network device, where the BGP update message carries the node identifier of the first access device, the updated second link bandwidth indication information, and the updated second interface mapping information.

Optionally, the first network device may send the node identifier of the first access device, the updated second link bandwidth indication information, and the updated second interface mapping information to the second network device according to the TCP or the UDP.

Step 202: The second network device receives the node identifier of the first access device, the second link bandwidth indication information, and the second interface mapping information that are sent by the first network device.

Optionally, the second network device may receive the BGP update message sent by the first network device, where the BGP update message carries the node identifier of the first access device, the second link bandwidth indication information, and the second interface mapping information.

Optionally, the second network device may receive, according to the TCP or the UDP, the node identifier of the first access device, the second link bandwidth indication information, and the second interface mapping information that are sent by the first network device.

Step 203: The second network device determines, based on the node identifier of the first access device, the second link bandwidth indication information, and the second interface mapping information, a second transmission link that is used to forward traffic to the first access device and that is between the first network device and the second network device.

For detailed descriptions of determining, by the second network device based on the node identifier of the first access device, the second link bandwidth indication information, and the second interface mapping information, the second transmission link that is used to forward the traffic to the first access device and that is between the first network device and the second network device, refer to the descriptions of determining, by the second network device based on the node identifier of the first access device, the first link bandwidth indication information, and the first interface mapping information, the first transmission link that is used to forward the traffic to the first access device and that is between the first network device and the second network device in step 104. Details are not described again.

Therefore, a total bandwidth of the second transmission link is less than or equal to a total bandwidth indicated by the second link bandwidth indication information.

In addition, compared with a total bandwidth indicated by first link bandwidth indication information, the total bandwidth indicated by the second link bandwidth indication information is less by a bandwidth of the first link, that is, the total bandwidth indicated by the second link bandwidth indication information is less than the total bandwidth indicated by the first link bandwidth indication information. Therefore, the total bandwidth of the second transmission link determined based on the second link bandwidth indication information is less than the total bandwidth of the first transmission link determined based on the first link bandwidth indication information.

In this way, when the fault occurs on the first link between the first access device and the first network device, the second network device immediately reduces the bandwidth of the transmission link that is used to forward the traffic to the first access device and that is between the first network device and the second network device, so that when the second DC sends the traffic to the first access device, an upstream link (namely, a link used to transmit traffic to the first link, including the second transmission link) of the first link decreases in real time in response to the fault of the first link. Therefore, traffic sent by the upstream link of the first link to the first network device is reduced, thereby fundamentally alleviating a problem that traffic congestion occurs on the first network device due to the fault of the first link. Therefore, the first network device, as described in the related technology, is not repeatedly congested due to traffic accumulation and enabling of a backpressure control mechanism before the first link recovers from the fault, and a packet loss occurs each time of backpressure control in a process in which the first network device repeatedly enables the backpressure control mechanism. For detailed descriptions of the packet loss phenomenon, refer to related descriptions in FIG. 1. Details are not described again.

It can be learned that in this embodiment, if the second network device determines, based on the node identifier of the first access device, the second link bandwidth indication information, and the second interface mapping information, the second transmission link that is used to forward the traffic to the first access device and that is between the first network device and the second network device, and the second network device does not send the node identifier of the first access device and the second link bandwidth indication information to the second access device, the second access device does not reduce, based on the second link bandwidth indication information, the bandwidth of the transmission link that is used to forward the traffic to the first access device and that is between the second access device and the second network device. Therefore, in this case, the second access device still forwards, to the second network device based on the transmission link configured before the fault occurs on the first link, the traffic destined for the first access device. The second network device reduces, based on the node identifier of the first access device, the second link bandwidth indication information, and the second interface mapping information, the bandwidth of the transmission link that is used to forward the traffic to the first access device and that is between the first network device and the second network device. Therefore, a bandwidth of a transmission link that is used to forward traffic to the first access device and that is between the second access device and the second network device is greater than the bandwidth of the transmission link that is used to forward the traffic to the first access device and that is between the first network device and the second network device. In this case, traffic congestion occurs on the second network device before the first link recovers from the fault. After the traffic congestion occurs, the second network device may send a backpressure control packet to the second access device to adjust a rate at which the second access device sends the traffic to the second network device. Because the second access device and the second network device belong to a same DC, namely, the second DC, a physical distance between the second access device and the second network device is not too long. Therefore, a time window required for the backpressure control packet to arrive at the second access device from the second network device is very small. In this way, time required for the second network device to enable the backpressure control mechanism to alleviate the traffic congestion is very short. Therefore, the second network device does not accumulate too many packets, and a packet loss caused by overflowing of a receiving buffer of the second network device is not caused.

In some example embodiments, if the second network device determines, based on the node identifier of the first access device, the second link bandwidth indication information, and the second interface mapping information, the second transmission link that is used to forward the traffic to the first access device and that is between the first network device and the second network device, and the second network device further sends the node identifier of the first access device and the second link bandwidth indication information to the second access device, the second access device determines, based on the second link bandwidth indication information, the transmission link that is used to forward the traffic to the first access device and that is between the second access device and the second network device (refer to step 105 and step 106). The total bandwidth indicated by the second link bandwidth indication information is less than the total bandwidth indicated by the first link bandwidth indication information. Therefore, compared with that the second access device determines, based on the first link bandwidth indication information, the bandwidth of the transmission link that is used to forward the traffic to the first access device and that is between the second access device and the second network device, the second access device determines, based on the second link bandwidth indication information, that the bandwidth of the transmission link that is used to forward the traffic to the first access device and that is between the second access device and the second network device is reduced. That is, after the fault occurs on the first link, the bandwidth of the transmission link that is used to forward the traffic to the first access device and that is between the first network device and the second network device is reduced, and the bandwidth of the transmission link that is used to forward the traffic to the first access device and that is between the second access device and the second network device is also reduced. Therefore, in this case, the traffic congestion occurs on the second access device before the first link recovers from the fault. After the traffic congestion occurs, the second access device may send a backpressure control packet to a server/storage device connected to the second access device, to adjust a rate at which the server/storage device sends the traffic to the second access device. Because a physical distance between the second access device and the server/storage device is very short, a time window required for the backpressure control packet to arrive at the server/storage device from the second access device is very small. In this way, time required for the second access device to enable the backpressure control mechanism to alleviate the traffic congestion is very short. Therefore, the second access device does not accumulate too many packets, and a packet loss caused by overflowing of a receiving buffer of the second access device is not caused.

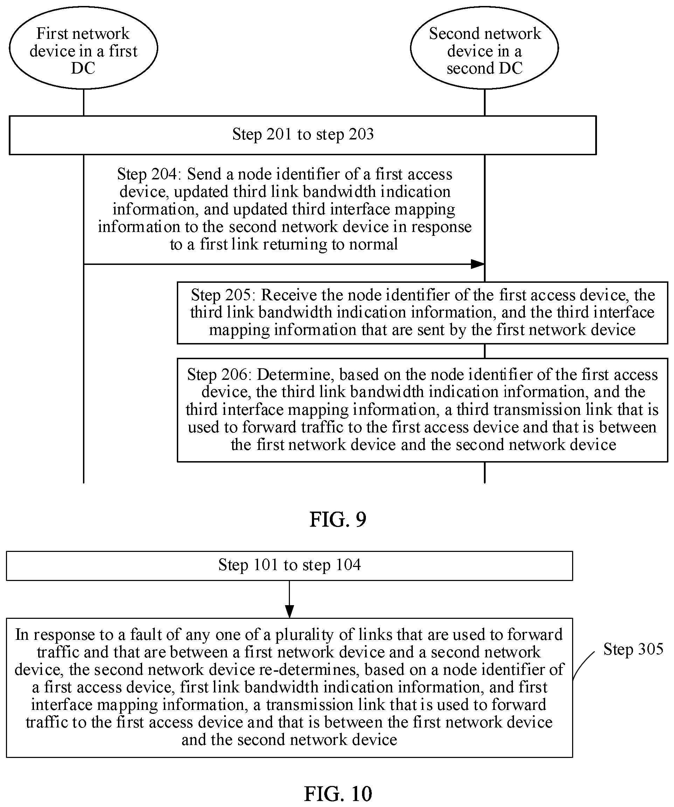

Subsequently, optionally, after the first link recovers from the fault, with reference to FIG. 9, in this embodiment of this application, after step 201 to step 203 are performed, the following step 204 to step 206 are further performed.

Step 204: The first network device sends the node identifier of the first access device, updated third link bandwidth indication information, and updated third interface mapping information to the second network device in response to the first link returning to normal.

When the first network device detects that the first link recovers from the fault, the first network device may determine the updated third link bandwidth indication information based on all normal links between the first access device and the first network device. The updated third link bandwidth indication information is link bandwidth indication information determined by the first network device based on all the normal links after the first link recovers from the fault. A specific implementation in which the first network device perceives that the first link recovers from the fault is not specifically limited in this embodiment of this application.

In addition, because the first link recovers, the interface of the first link in the first network device may be normally used to receive the traffic forwarded by the network-side interface of the first network device. Therefore, the first network device may determine the updated third interface mapping information based on the interface of the first link in the first network device, and the updated third interface mapping information indicates a mapping relationship obtained after the mapping relationship including the interface of the first link in the first network device is added to the mapping relationship between the network-side interface that normally runs and the access-side interface that normally runs in the first network device before the first link recovers from the fault.

Optionally, the first network device may send a BGP update message to the second network device, where the BGP update message carries the node identifier of the first access device, the updated third link bandwidth indication information, and the updated third interface mapping information.

Optionally, the first network device may send the node identifier of the first access device, the updated third link bandwidth indication information, and the updated third interface mapping information to the second network device according to the TCP or the UDP.

Step 205: The second network device receives the node identifier of the first access device, the third link bandwidth indication information, and the third interface mapping information that are sent by the first network device.

Optionally, the second network device may receive the BGP update message sent by the first network device, where the BGP update message carries the node identifier of the first access device, the third link bandwidth indication information, and the third interface mapping information.

Optionally, the second network device may receive, according to the TCP or the UDP, the node identifier of the first access device, the third link bandwidth indication information, and the third interface mapping information that are sent by the first network device.

Step 206: The second network device determines, based on the node identifier of the first access device, the third link bandwidth indication information, and the third interface mapping information, a third transmission link that is used to forward traffic to the first access device and that is between the first network device and the second network device.

For detailed descriptions of determining, by the second network device based on the node identifier of the first access device, the third link bandwidth indication information, and the third interface mapping information, the third transmission link that is used to forward the traffic to the first access device and that is between the first network device and the second network device, refer to the descriptions of determining, by the second network device based on the node identifier of the first access device, the first link bandwidth indication information, and the first interface mapping information, the first transmission link that is used to forward the traffic to the first access device and that is between the first network device and the second network device in step 104. Details are not described again.

Therefore, a total bandwidth of the third transmission link is less than or equal to a total bandwidth indicated by the third link bandwidth indication information.

In addition, compared with the total bandwidth indicated by the second link bandwidth indication information, the total bandwidth indicated by the third link bandwidth indication information is greater by the bandwidth of the first link, that is, the total bandwidth indicated by the third link bandwidth indication information is greater than the total bandwidth indicated by the second link bandwidth indication information. Therefore, the total bandwidth of the third transmission link determined based on the third link bandwidth indication information is greater than the total bandwidth of the second transmission link determined based on the second link bandwidth indication information.

In this way, when the first link between the first access device and the first network device recovers from the fault, the second network device immediately increases the bandwidth of the transmission link that is used to forward the traffic to the first access device and that is between the first network device and the second network device, so that when the second DC sends the traffic to the first access device, an upstream link (namely, a link used to transmit traffic to the first link, including the third transmission link) of the first link increases in real time in response to the first link recovering from the fault, to improve network bandwidth utilization and improve traffic sending efficiency.

In some other embodiments, in this embodiment of this application, after a transmission link between an access device and a network device in a first DC and a second DC is configured based on the solution in FIG. 4 or FIG. 7, and a transmission link between network devices used to connect the first DC and the second DC is configured based on the solution in FIG. 4 or FIG. 7, when the first DC and the second DC send traffic to each other based on the configuration, if a fault occurs on the link between the network devices connecting the first DC and the second DC, refer to FIG. 10. FIG. 10 is a schematic flowchart of still another communication method according to an embodiment of this application. Optionally, the method may be applied to the implementation environment shown in FIG. 2 or FIG. 3. The method is applied to the implementation environment shown in FIG. 2, and the network device in the second DC in the implementation environment performs a corresponding step. As shown in FIG. 10, in the method, the foregoing step 101 to step 104 may be first performed, and then the following step 305 is performed.

Step 305: In response to a fault of any one of a plurality of links that are used to forward traffic and that are between a first network device and a second network device, the second network device re-determines, based on a node identifier of a first access device, first link bandwidth indication information, and first interface mapping information, a transmission link that is used to forward traffic to the first access device and that is between the first network device and the second network device.

Specifically, in response to a fault of any one of the foregoing plurality of links, the second network device re-determines, from remaining links of the plurality of links other than the faulty link based on the node identifier of the first access device, the first link bandwidth indication information, and the first interface mapping information, the transmission link that is used to forward the traffic to the first access device and that is between the first network device and the second network device.

For example, with reference to FIG. 2, assuming that the first network device is a network device 121 in the first DC, and the second network device is a network device 221 in the second DC, four links are included between the first network device and the second network device. When the second network device detects that a fault occurs on any one of the four links, the second network device re-determines, from remaining three links in the foregoing four links other than the faulty link based on the node identifier of the first access device, the first link bandwidth indication information, and the first interface mapping information, the transmission link that is used to forward the traffic to the first access device and that is between the first network device and the second network device.

For descriptions of re-determining, by the second network device based on the node identifier of the first access device, the first link bandwidth indication information, and the first interface mapping information, the transmission link that is used to forward the traffic to the first access device and that is between the first network device and the second network device, refer to the descriptions of determining, by the second network device based on the node identifier of the first access device, the first link bandwidth indication information, and the first interface mapping information, the first transmission link that is used to forward the traffic to the first access device and that is between the first network device and the second network device in step 104. Details are not described again.

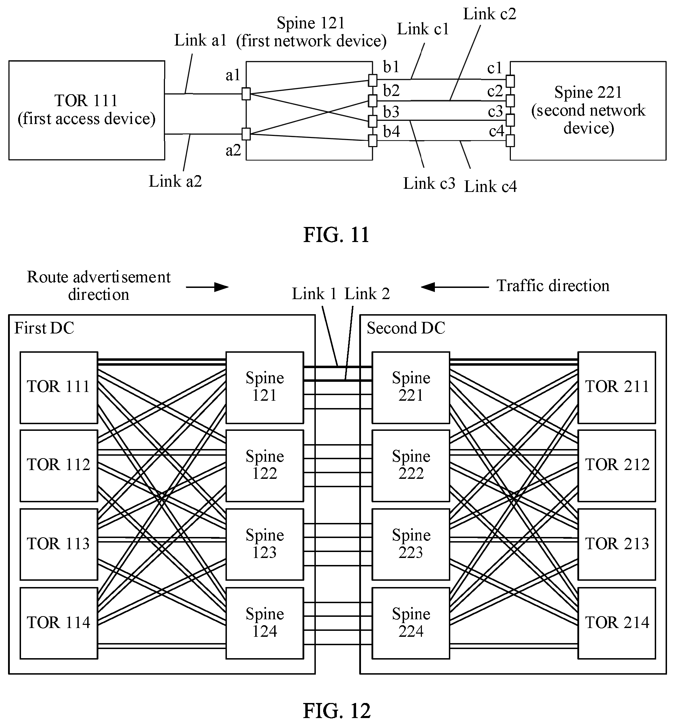

In an example, with reference to FIG. 6, FIG. 11 is a diagram of re-determining, in response to a fault of a link between a first network device and a second network device, a transmission link that is used to forward traffic to a first access device and that is between the first network device and the second network device according to an embodiment of this application. As shown in FIG. 11, if the first network device is Spine 121 in the first DC, the first access device is TOR 111 in the first DC, the second network device is Spine 221 in the second DC, and a mapping relationship that is between a network-side interface and an access-side interface in the first network device and that is indicated by the first interface mapping information is shown in FIG. 11, when the second network device determines that the first transmission link is a link c1 and a link c2 after performing step 104, and the second network device detects that a fault occurs on the link c1, the second network device needs to re-determine, based on the node identifier of the first access device, the first link bandwidth indication information, and the first interface mapping information, that a transmission link that is used to forward traffic to the first access device and that is between the first network device and the second network device includes c2 and a link c3. In this way, after traffic of the second DC reaches the first network device through the link c2, based on the mapping relationship between the network-side interface and the access-side interface in the first network device, the traffic of the link c2 may reach a link a2 through an interface b2 and an interface a2 of the first network device for transmission. After traffic of the second DC reaches the first network device through the link c3, based on the mapping relationship between the network-side interface and the access-side interface in the first network device, the traffic of the link c3 may reach a link a1 through an interface b3 and an interface a1 of the first network device for transmission. It can be learned that after the traffic sent by the second DC to the first DC is forwarded to the first network device through different links between the first network device and the second network device, the first network device may distribute the traffic to different links between the first network device and the first access device, to ensure that traffic congestion does not occur on the first network device.

It should be understood that the second network device does not select a link c4 as the transmission link that is used to forward the traffic to the first access device and that is between the first network device and the second network device. Because after traffic of the second DC reaches the first network device through the link c4, based on the mapping relationship between the network-side interface and the access-side interface in the first network device, the traffic of the link c4 may reach the link a2 through an interface b4 and the interface a2 of the first network device for transmission, the traffic transmitted to the first access device through the link c2 and the traffic transmitted to the first access device through the link c4 are both forwarded to the link a2. This may cause congestion on the first network device, and may further cause a packet loss.

It should be understood that, when a fault occurs on any one of the plurality of links that are used to forward the traffic and that are between the first network device and the second network device, if the faulty link is a link used to forward traffic to the first access device, the link fault causes a decrease in a link bandwidth that is sent by the second network device to the first network device and that is destined for the first access device. Consequently, traffic that is sent by the second network device to the first network device and that is destined for the first access device is reduced. Because all links between the first network device and the first access device are normal, a part of links between the first network device and the first access device are idle, causing a waste of bandwidth resources and reducing traffic forwarding efficiency. However, when the second network device can determine, by performing step 305 from remaining links other than the faulty link between the first network device and the second network device, a transmission link adapted to the first link bandwidth indication information, and forward traffic to the first access device based on the transmission link, utilization of the link between the first access device and the first network device can be improved when a fault occurs on the link between the first network device and the second network device.

To further understand the method provided in embodiments of this application, the following further describes the method with reference to examples.

With reference to FIG. 3, FIG. 12 is a diagram of a method according to an embodiment of this application. As shown in FIG. 12, a traffic direction is from a second DC to a first DC, that is, the second DC serves as a source DC to send traffic to the first DC serving as a destination DC. In this case, a TOR switch located in the first DC advertises a local route to the second DC, so that a device in the second DC learns a route to the TOR switch in the first DC. In this embodiment of this application, a node identifier of an access device in the destination DC, link bandwidth information between the access device and a network device in the destination DC, and interface mapping information of the network device in the destination DC need to be sent to the source DC along a route advertisement direction, so that a device receiving the information adjusts a link bandwidth used to forward traffic to the destination DC. For the link bandwidth information, refer to the foregoing descriptions of the first link bandwidth information. For the interface mapping information, refer to the foregoing descriptions of the first interface mapping information. Details are not described again.

As shown in FIG. 12, TOR 111 may send a node identifier of TOR 111 to Spine 121. For detailed descriptions, refer to step 101.

In response, Spine 121 receives the node identifier of TOR 111, obtains link bandwidth indication information (denoted as link bandwidth indication information 1) between TOR 111 and Spine 121, and obtains interface mapping information (denoted as interface mapping information 1) of Spine 121. For example, a bandwidth of each link shown in FIG. 12 is 400 G, and a total bandwidth indicated by the link bandwidth indication information 1 is a total of 800 G of two links. Then, Spine 121 sends a node identifier of TOR 111, the link bandwidth indication information 1, and the interface mapping information 1 to Spine 221. For detailed descriptions, refer to step 102. Details are not described again.

In response, Spine 221 receives the node identifier of TOR 111, the link bandwidth information 1, and the interface mapping information 1, and determines, from the four links between Spine 121 and Spine 221, a transmission link 1 that is used to forward traffic to TOR 111 and that is between Spine 121 and Spine 221. Because the total bandwidth indicated by the link bandwidth indication information 1 is two links with a total of 800 G, to maximize utilization of a link between TOR 111 and Spine 121, Spine 221 may determine that the transmission link 1 includes two links with a total of 800 G, and determine, based on the interface mapping information 1, that a link 1 and a link 2 are the transmission link 1. For detailed descriptions, refer to step 104. Details are not described again.

Subsequently, Spine 221 may further send the node identifier of TOR 111 and the link bandwidth indication information 1 to TOR 211, so that TOR 211 determines two transmission links with a total of 800 G of TOR 211 as a transmission link 2 that is used to forward traffic to TOR 111 and that is between Spine 221 and TOR 211, and the transmission link 2 also includes two links with a total of 800 G. For detailed descriptions, refer to step 105 and step 106. Details are not described again.

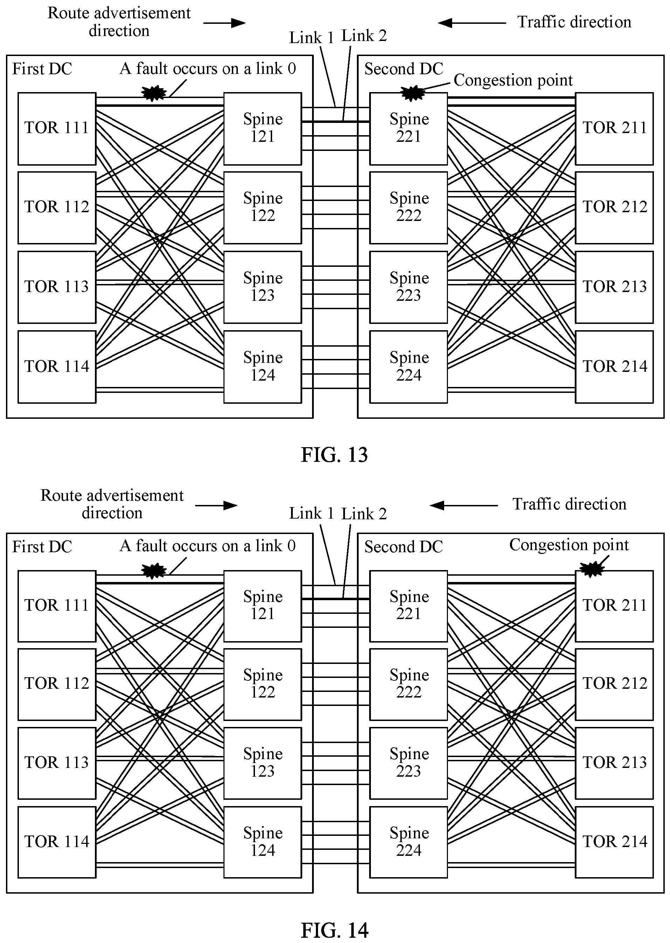

With reference to FIG. 12, FIG. 13 is another diagram of a method according to an embodiment of this application. As shown in FIG. 13, when detecting that a fault occurs on a link 0, Spine 121 re-obtains link bandwidth indication information (denoted as link bandwidth indication information 2) between TOR 111 and Spine 121, and a total bandwidth indicated by the link bandwidth indication information 2 is a total of 400 G (a remaining link bandwidth after the link 0 is removed) on one link. Spine 121 further obtains latest interface mapping information (denoted as interface mapping information 2) of Spine 121. Then, Spine 121 sends a node identifier of TOR 111, the link bandwidth indication information 2, and the interface mapping information 2 to Spine 221. Therefore, Spine 221 may determine, based on the node identifier of TOR 111, the link bandwidth indication information 2, and the interface mapping information 2 that are received, a transmission link 3 that is used to forward traffic to TOR 111 and that is between Spine 121 and Spine 221. A bandwidth of the transmission link 3 is not greater than a total of 400 G of one link indicated by the link bandwidth indication information 2. To maximize bandwidth utilization, the transmission link 3 may be one link (a link 2 shown in FIG. 13) with a total of 400 G.

After Spine 221 determines the transmission link 3, if Spine 221 does not send the node identifier of TOR 111 and link bandwidth indication information 2 to TOR 211, so that TOR 211 adjusts a transmission link that is used to forward traffic to TOR 111 and that is between TOR 211 and Spine 221, when a server/storage device in the second DC forwards traffic to TOR 111 through TOR 211, Spine 221, and Spine 121, because there are two links with a total of 800 G between TOR 211 and Spine 221, the transmission link 3 (namely, the link 2 shown in FIG. 13) between Spine 221 and Spine 121 is one link with a total of 400 G. However, after the faulty link 0 is removed from the bandwidth of the links between Spine 121 and TOR 111, one link with a total of 400 G remains. It can be seen that when traffic is forwarded to TOR 111 through TOR 211, Spine 221, and Spine 121, traffic congestion occurs at a location of Spine 221. That is, in a scenario in which the second DC sends traffic to the first DC, when a fault occurs on a link between TOR 111 and Spine 121 in the first DC, Spine 221 in the second DC is a congestion point. Because a distance from Spine 221 to the previous-hop TOR 211 is usually short, when Spine 221 enables a backpressure control mechanism to alleviate congestion, a packet loss does not occur.

With reference to FIG. 13, FIG. 14 is still another diagram of a method according to an embodiment of this application. As shown in FIG. 14, after Spine 221 determines a transmission link 3, Spine 221 further sends a node identifier of TOR 111 and link bandwidth indication information 2 to TOR 211. In this case, TOR 211 may determine, based on the node identifier of TOR 111 and the link bandwidth indication information 2 that are received, a transmission link 4 that is used to forward traffic to TOR 111 and that is between TOR 211 and Spine 221. A bandwidth of the transmission link 4 is not greater than a total of 400 G of one link indicated by the link bandwidth indication information 2. To maximize bandwidth utilization, the transmission link 4 includes one link with a total of 400 G (as shown by a bold black line between TOR 211 and Spine 221 in FIG. 14).

In this case, when a server/storage device in the second DC forwards traffic to TOR 111 through TOR 211, Spine 221, and Spine 121, because the transmission link 4 between TOR 211 and Spine 221 is one link with a total of 400 G, and a transmission link 3 between Spine 221 and Spine 121 is one link with a total of 400 G, after a faulty link 0 is removed from the bandwidth of the link between Spine 121 and TOR 111, one link with a total of 400 G remains. However, the server/storage device (namely, a traffic source) that sends traffic to TOR 211 still sends traffic at an original rate. Therefore, when the server/storage device in the second DC forwards the traffic to TOR 111 through TOR 211, Spine 221, and Spine 121, traffic congestion occurs at a location of TOR 211. That is, in a scenario in which the second DC sends traffic to the first DC, when a fault occurs on a link between TOR 111 and Spine 121 in the first DC, TOR 211 in the second DC is a congestion point. Because TOR 211 is very close to the server/storage device that is connected to TOR 211 and that serves as the traffic source, when TOR 211 enables a backpressure control mechanism to alleviate congestion, a packet loss does not occur.

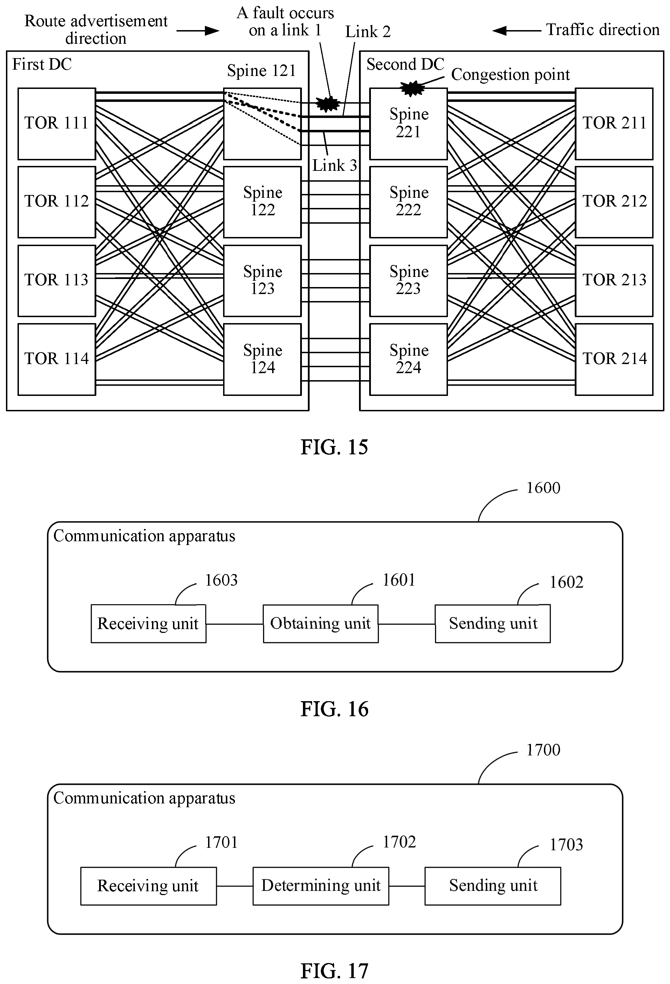

With reference to FIG. 12, FIG. 15 is still another diagram of a method according to an embodiment of this application. As shown in FIG. 15, when Spine 221 detects that a fault occurs on a link 1, Spine 221 re-determines, based on a node identifier of TOR 111, link bandwidth indication information 1, and interface mapping information 1 that are previously received, a transmission link 1 that is used to forward traffic to TOR 111 and that is between Spine 121 and Spine 221, which is denoted as a transmission link 5. A bandwidth of the transmission link 5 is not greater than a total of 800 G of two links indicated by the link bandwidth indication information 1. To maximize bandwidth utilization, the transmission link 5 includes a link 2 and a link 3, namely, the two links with a total of 800 G, shown in FIG. 15. It can be learned that after reaching Spine 121, traffic of the link 2 and traffic of the link 3 are respectively forwarded to different links between TOR 111 and Spine 121, thereby improving utilization of the link between TOR 111 and Spine 121 after a fault occurs on the link 1.

It should be understood that when a fault occurs on the link 1, traffic congestion occurs on Spine 221, that is, Spine 221 is a congestion point. Because a distance from Spine 221 to the previous-hop TOR 211 is usually short, when Spine 221 enables a backpressure control mechanism to alleviate congestion, a packet loss does not occur.

The foregoing mainly describes the solutions provided in embodiments of this application from the perspective of the methods.

To implement the foregoing functions, FIG. 16 is a diagram of a structure of a communication apparatus according to an embodiment of this application. The communication apparatus 1600 is used for a first network device in a first DC, and is configured to perform a part performed by the first network device in the foregoing communication method, for example, configured to perform a part performed by the first network device in the method shown in FIG. 4, FIG. 8, or FIG. 9. The communication apparatus 1600 may include an obtaining unit 1601 and a sending unit 1602.

The obtaining unit 1601 is configured to obtain a node identifier of a first access device in the first DC. The sending unit 1602 is configured to send the node identifier of the first access device, first link bandwidth indication information, and first interface mapping information to a second network device in a second DC. The first link bandwidth indication information indicates a total bandwidth of all normal links that are used to transmit traffic and that are between the first network device and the first access device. The first interface mapping information indicates a mapping relationship between at least one network-side interface and at least one access-side interface in the first network device, the at least one network-side interface is configured to connect to the second network device, and the at least one access-side interface is configured to connect to the first access device.

For example, with reference to FIG. 4, the obtaining unit 1601 may be configured to perform step 101, and the sending unit 1602 may be configured to perform step 102.

Optionally, the communication apparatus 1600 further includes a receiving unit 1603, configured to receive a first BGP update message sent by the first access device, where the first BGP update message carries the node identifier of the first access device.

Optionally, the first BGP update message carries the node identifier of the first access device by reusing an extended community attribute, using a new attribute, or using a new extended attribute.

Optionally, the receiving unit 1603 is configured to receive the node identifier of the first access device sent by the first access device according to the TCP or the UDP.

Optionally, the sending unit 1602 is specifically configured to send a second BGP update message to the second network device, where the second BGP update message carries the node identifier of the first access device, the first link bandwidth indication information, and the first interface mapping information.

Optionally, the first link bandwidth indication information includes one or more of the following: a total bandwidth value of all the normal links, a quantity of all the normal links, or a bandwidth value of at least one of all the normal links.

Optionally, the second BGP update message carries the first link bandwidth indication information by using a new attribute, using a new extended attribute, or reusing an extended attribute.

Optionally, the first interface mapping information includes identification information of a network-side interface, identification information of an access-side interface, and an interface mapping rule.

Optionally, the second BGP update message carries the first interface mapping information by using a new attribute or a new extended attribute.

Optionally, the sending unit 1602 is specifically configured to send the node identifier of the first access device, the first link bandwidth indication information, and the first interface mapping information to the second network device according to the TCP or the UDP.

Optionally, all the normal links include a plurality of links, the plurality of links include a first link, and the sending unit 1602 is further configured to send the node identifier of the first access device, updated second link bandwidth indication information, and updated second interface mapping information to the second network device in response to a fault of the first link.

For example, with reference to FIG. 8, the sending unit 1602 may be configured to perform step 201.

Optionally, in still another possible design, the sending unit 1602 is further configured to send the node identifier of the first access device, updated third link bandwidth indication information, and updated third interface mapping information to the second network device in response to the first link returning to normal.

For example, with reference to FIG. 9, the sending unit 1602 may be configured to perform step 204.

Optionally, in still another possible design, the first access device is a TOR switch, and the first network device and the second network device are Spine switches.

Optionally, in still another possible design, the node identifier of the first access device is an ID of the first access device or a loopback address of the first access device.

For detailed descriptions of the foregoing optional implementations, refer to the foregoing method embodiments. Details are not described herein again. In addition, for descriptions of any communication apparatus 1600 provided above and descriptions of beneficial effects, refer to the foregoing corresponding method embodiments. Details are not described again.

FIG. 17 is a diagram of a structure of another communication apparatus according to an embodiment of this application. The communication apparatus 1700 is used for a second network device in a second DC, and is configured to perform a part performed by the second network device in the foregoing communication method, for example, configured to perform a part performed by the second network device in the method shown in FIG. 4, FIG. 7, FIG. 8, or FIG. 9. The communication apparatus 1700 may include a receiving unit 1701 and a determining unit 1702.

The receiving unit 1701 is configured to receive a node identifier of a first access device, first link bandwidth indication information, and first interface mapping information that are sent by a first network device. The determining unit 1702 is configured to determine, based on the node identifier of the first access device, the first link bandwidth indication information, and the first interface mapping information, a first transmission link that is used to forward traffic to the first access device and that is between the first network device and the second network device, where the first network device and the first access device are devices in a first DC, the first link bandwidth indication information indicates a total bandwidth of all normal links that are used to transmit traffic and that are between the first network device and the first access device, the first interface mapping information indicates a mapping relationship between at least one network-side interface and at least one access-side interface in the first network device, the at least one network-side interface is configured to connect to the second network device, and the at least one access-side interface is configured to connect to the first access device.

For example, with reference to FIG. 4, the receiving unit 1701 may be configured to perform step 103, and the determining unit 1702 may be configured to perform step 104.

Optionally, a total bandwidth of the first transmission link is less than or equal to the total bandwidth indicated by the first link bandwidth indication information.

Optionally, the first link bandwidth indication information includes one or more of the following: a total bandwidth value of all the normal links, a quantity of all the normal links, or a bandwidth value of at least one of all the normal links.

Optionally, the first interface mapping information includes identification information of a network-side interface, identification information of an access-side interface, and an interface mapping rule.

Optionally, the receiving unit 1701 is specifically configured to receive a second BGP update message sent by the first network device, where the second BGP update message carries the node identifier of the first access device, the first link bandwidth indication information, and the first interface mapping information.

Optionally, the receiving unit 1701 is specifically configured to receive, according to the TCP or the UDP, the node identifier of the first access device, the first link bandwidth indication information, and the first interface mapping information that are sent by the first network device.

Optionally, the receiving unit 1701 is further configured to receive the node identifier of the first access device, second link bandwidth indication information, and second interface mapping information that are sent by the first network device. The determining unit 1702 is further configured to determine, based on the node identifier of the first access device, the second link bandwidth indication information, and the second interface mapping information, a second transmission link that is used to forward traffic to the first access device and that is between the first network device and the second network device, where a total bandwidth of the second transmission link is less than or equal to a total bandwidth indicated by the second link bandwidth indication information, and the total bandwidth of the second transmission link is less than the total bandwidth of the first transmission link.

For example, with reference to FIG. 8, the receiving unit 1701 may be configured to perform step 202, and the determining unit 1702 may be configured to perform step 203.

Optionally, the receiving unit 1701 is further configured to receive the node identifier of the first access device, third link bandwidth indication information, and third interface mapping information that are sent by the second network device. The determining unit 1702 is further configured to determine, based on the node identifier of the first access device, the third link bandwidth indication information, and the third interface mapping information, a third transmission link that is used to forward traffic to the first access device and that is between the first network device and the second network device, where a total bandwidth of the third transmission link is greater than the total bandwidth of the second transmission link.

For example, with reference to FIG. 9, the receiving unit 1701 may be configured to perform step 205, and the determining unit 1702 may be configured to perform step 206.

Optionally, the communication apparatus 1700 further includes a sending unit 1703, configured to: after receiving the node identifier of the first access device, the first link bandwidth indication information, and the first interface mapping information that are sent by the first network device, send the node identifier of the first access device and the first link bandwidth indication information to a second access device, where the second access device is an access device that is in the second DC and that sends traffic to the second network device.

For example, with reference to FIG. 7, the sending unit 1703 may be configured to perform step 105.

Optionally, the sending unit 1703 is specifically configured to send a third BGP update message to the second access device, where the third BGP update message carries the node identifier of the first access device and the first link bandwidth indication information.

Optionally, the sending unit 1703 is specifically configured to send the node identifier of the first access device and the first link bandwidth indication information to the second access device according to the TCP or the UDP.

Optionally, the sending unit 1703 is further configured to send a backpressure control packet to the second access device in response to occurrence of traffic congestion, where the backpressure control packet is used to adjust a rate of traffic sent to the second network device, and the second access device is the access device that is in the second DC and that sends the traffic to the second network device.

Optionally, all the normal links between the first network device and the second network device include a plurality of links, and the determining unit 1702 is further configured to: in response to a fault of any one of the plurality of links, re-determine, based on the node identifier of the first access device, the first link bandwidth indication information, and the first interface mapping information, a transmission link that is used to forward traffic to the first access device and that is between the first network device and the second network device.

For detailed descriptions of the foregoing optional implementations, refer to the foregoing method embodiments. Details are not described herein again. In addition, for descriptions of any communication apparatus 1700 provided above and descriptions of beneficial effects, refer to the foregoing corresponding method embodiments. Details are not described again.

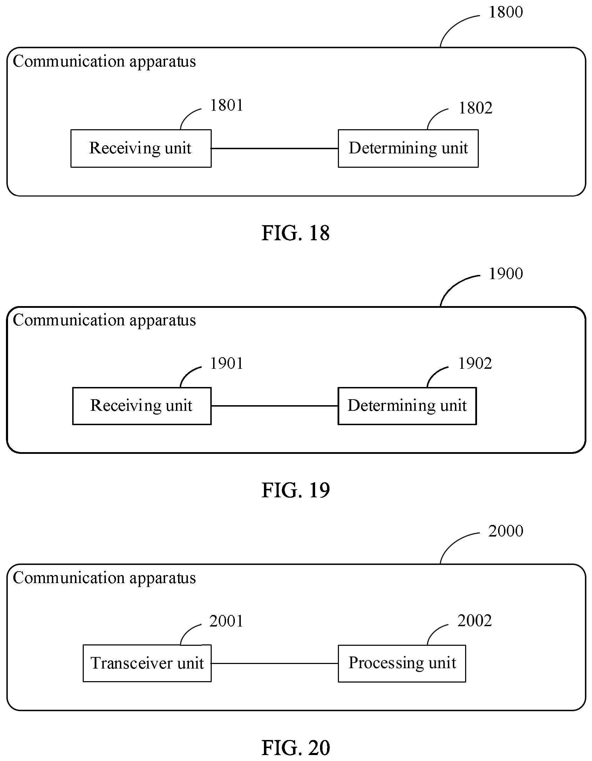

FIG. 18 is a diagram of a structure of still another communication apparatus according to an embodiment of this application. The communication apparatus 1800 is used for a second network device in a second DC, and is configured to perform a part performed by the second network device in the foregoing communication method, for example, configured to perform a part performed by the second network device in the method shown in FIG. 4 or FIG. 10. The communication apparatus 1800 may include a receiving unit 1801 and a determining unit 1802.

The receiving unit 1801 is configured to receive a node identifier of a first access device in a first DC, first link bandwidth indication information, and first interface mapping information that are sent by a first network device in the first DC. The determining unit 1802 is configured to: in response to a fault of any one of a plurality of links that are used to forward traffic and that are between the first network device and the second network device, re-determine, based on the node identifier of the first access device, the first link bandwidth indication information, and the first interface mapping information, a transmission link that is used to forward traffic to the first access device and that is between the first network device and the second network device, where the first link bandwidth indication information indicates a total bandwidth of all normal links that are used to transmit traffic and that are between the first network device and the first access device, the first interface mapping information indicates a mapping relationship between at least one network-side interface and at least one access-side interface in the first network device, the at least one network-side interface is configured to connect to the second network device, and the at least one access-side interface is configured to connect to the first access device.

For example, with reference to FIG. 4, the receiving unit 1801 may be configured to perform step 103. With reference to FIG. 10, the determining unit 1802 may be configured to perform step 305.

For specific descriptions of the communication apparatus shown in FIG. 18, refer to the foregoing method embodiments. Details are not described herein again. In addition, for descriptions of the communication apparatus 1800 and descriptions of beneficial effects, refer to the foregoing corresponding method embodiments. Details are not described again.

FIG. 19 is a diagram of a structure of still another communication apparatus according to an embodiment of this application. The communication apparatus 1900 is used for a second access device in a second DC, and is configured to perform a part performed by the second access device in the foregoing communication method, for example, configured to perform a part performed by the second access device in the method shown in FIG. 4, FIG. 7, FIG. 8, FIG. 9, or FIG. 10. The communication apparatus 1900 may include a receiving unit 1901 and a determining unit 1902.

The receiving unit 1901 is configured to receive link bandwidth indication information and a node identifier of a first access device that are sent by a second network device in the second DC, where the first access device is any access device in a first DC, the first DC further includes a first network device, the link bandwidth indication information indicates a total bandwidth of all normal links that are used to transmit traffic and that are between the first access device and the first network device, and the first access device communicates with the second access device via the first network device and the second network device. The determining unit 1902 is configured to determine, based on the link bandwidth indication information and the node identifier of the first access device, a transmission link that is used to transmit traffic to the first access device and that is between the second network device and the second access device.

For example, with reference to FIG. 7, the receiving unit 1901 and the determining unit 1902 may be configured to perform step 106.

Optionally, the receiving unit 1901 is specifically configured to receive a BGP update message sent by the second network device, where the BGP update message includes the link bandwidth indication information and the node identifier of the first access device.

Optionally, the receiving unit 1901 is specifically configured to receive, according to the TCP or the UDP, the link bandwidth indication information and the node identifier of the first access device that are sent by the second network device.

For detailed descriptions of the foregoing optional implementations, refer to the foregoing method embodiments. Details are not described herein again. In addition, for descriptions of any communication apparatus 1900 provided above and descriptions of beneficial effects, refer to the foregoing corresponding method embodiments. Details are not described again.

An embodiment of this application further provides another communication apparatus. The communication apparatus is used for a first access device in a first DC, and is configured to perform a part performed by the first access device in the foregoing communication method, for example, configured to perform a part performed by the first access device in the method shown in FIG. 4, FIG. 7, FIG. 8, FIG. 9, or FIG. 10. The communication apparatus may include a sending unit.

The sending unit is configured to send a node identifier of the first access device to a first network device in the first DC.

Optionally, the sending unit is specifically configured to send a first BGP update message to the first network device, where the first BGP update message carries the node identifier of the first access device.

Optionally, the sending unit is specifically configured to send the node identifier of the first access device to the first network device according to the TCP or the UDP.

For detailed descriptions of the foregoing optional implementations, refer to the foregoing method embodiments. Details are not described herein again. In addition, for descriptions of any communication apparatus provided above and descriptions of beneficial effects, refer to the foregoing corresponding method embodiments. Details are not described again.

FIG. 20 is a diagram of a structure of still another communication apparatus according to an embodiment of this application. The communication apparatus 2000 may be used for the first network device, the second network device, the first access device, or the second access device described above, and is configured to perform the foregoing communication method, for example, configured to perform the method shown in FIG. 4, FIG. 7, FIG. 8, FIG. 9, or FIG. 10. The communication apparatus 2000 may include a transceiver unit 2001 and a processing unit 2002. The transceiver unit 2001 is configured to perform a receiving-related operation and/or a sending-related operation in the method provided in embodiments of this application, and the processing unit 2002 is configured to perform an operation other than the receiving-related operation and/or the sending-related operation in the method in embodiments of this application. For descriptions of the communication apparatus 2000 and descriptions of beneficial effects, refer to the foregoing corresponding method embodiments. Details are not described again.

Persons skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

It should be noted that division into modules/units in FIG. 16 to FIG. 20 is an example, is merely logical function division, and may be other division during actual implementation. For example, two or more functions may be integrated into one processing module. The functions implemented by the integrated module may be implemented in a form of hardware, or may be implemented in a form of a software functional module.

An embodiment of this application provides a network device. The network device is configured to implement some or all of functions of the communication method provided in embodiments of this application. For example, the network device may be implemented as the first network device, the second network device, the first access device, or the second access device described above, and is configured to perform some or all of the steps performed by the first network device, the second network device, the first access device, or the second access device in the foregoing method.

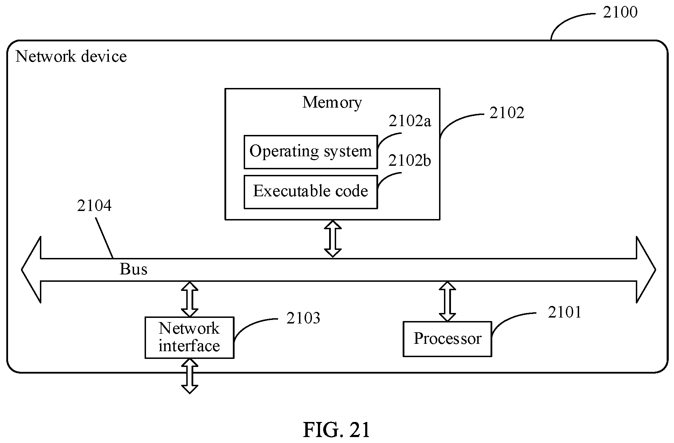

FIG. 21 is a diagram of a structure of a network device according to an embodiment of this application. As shown in FIG. 21, the network device 2100 includes a processor 2101, a memory 2102, a network interface 2103, and a bus 2104. The processor 2101, the memory 2102, and the network interface 2103 are communicatively connected to each other through the bus 2104.

The processor 2101 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor (digital signal processor, DSP), a data processing unit (data processing unit, DPU), an application-specific integrated circuit (application-specific integrated circuit, ASIC), a field-programmable gate array (field-programmable gate array, FPGA), another programmable logic device, a discrete gate or transistor logic device, a discrete hardware component, a neural-network processing unit (neural processing unit, NPU), a tensor processing unit (tensor processing unit, TPU), an artificial intelligence (artificial intelligent) chip, or a network processor (network processor, NP). The processor 2101 may alternatively be an integrated circuit chip and has a signal processing capability. In an implementation process, some or all of functions of the method provided in embodiments of this application may be completed through an integrated logic circuit of hardware in the processor 2101 or instructions in a form of software.

The memory 2102 is configured to store a computer program, and the computer program includes an operating system 2102a and executable code (namely, program instructions) 2102b. For example, the memory 2102 is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a flash memory, or another type of static storage device that can store static information and instructions, or is a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or another type of dynamic storage device that can store information and instructions, or is a compact disc read-only memory or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected executable code in a form of instructions or a data structure and that can be accessed by a computer, but is not limited thereto. For example, the memory 2102 is configured to store a routing table, an interface mapping rule, and the like. For example, the memory 2102 exists independently, and is connected to the processor 2101 through the bus 2104. Alternatively, the memory 2102 and the processor 2101 are integrated together. The memory 2102 may store executable code. When the executable code stored in the memory 2102 is executed by the processor 2101, the processor 2101 is configured to perform some or all of functions of the method provided in embodiments of this application. For an implementation in which the processor 2101 performs the process, refer to the related descriptions in the foregoing embodiments correspondingly. The memory 2102 may further include a software module, data, and the like that are required by another running process such as an operating system.

The network interface 2103 uses a transceiver module, for example, but not limited to a transceiver, to implement communication with another device or a communication network. For example, the network interface 2103 may be any one or any combination of the following components: a wireless network interface (for example, an Ethernet interface), a wireless network interface card, and the like having a network access function. The network interface 2103 includes a receiving unit configured to receive data/a packet and a sending unit configured to send data/a packet.

The bus 2104 is any type of communication bus configured to implement interconnection between internal components (for example, the memory 2102, the processor 2101, and the network interface 2103) in the network device 2100, for example, a system bus. In this embodiment of this application, an example in which the foregoing components in the network device 2100 are interconnected through the bus 2104 is used for description. Optionally, the foregoing components in the network device 2100 may be communicatively connected to each other in a connection manner other than the bus 2104. For example, the foregoing components in the network device 2100 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components. Descriptions of procedures corresponding to the foregoing accompanying drawings have respective focuses. For a part that is not described in detail in a procedure, refer to related descriptions of other procedures.

All or some of the foregoing embodiments may be implemented by using software, hardware, firmware, or any combination thereof. When software is used to implement embodiments, all or some of embodiments may be implemented in a form of a computer program product. The computer program product that provides a program development platform includes one or more computer instructions. When these computer program instructions are loaded and executed on the network device 2100, some or all of the functions of the method provided in embodiments of this application are implemented.

In addition, the computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

For example, with reference to FIG. 20, a function implemented by the transceiver unit 2001 in the communication apparatus 2000 may be implemented by the network interface 2103 shown in FIG. 21. A function implemented by the processing unit 2002 in the communication apparatus 2000 may be implemented by the processor 2101 in FIG. 21 by executing program code in the memory 2102 in FIG. 21.

An embodiment of this application further provides a communication system. The system includes a first network device in a first DC and a second network device in a second DC. The first network device is configured to perform a part performed by the first network device in the foregoing method embodiments, and the second network device is configured to perform a part performed by the second network device in the foregoing method embodiments.

An embodiment of this application further provides another communication system. The system includes a first network device and a first access device in a first DC, and a second network device and a second access device in a second DC. The first network device is configured to perform a part performed by the first network device in the foregoing method embodiments, the second network device is configured to perform a part performed by the second network device in the foregoing method embodiments, the first access device is configured to perform a part performed by the first access device in the foregoing method embodiments, and the second access device is configured to perform a part performed by the second access device in the foregoing method embodiments.

An embodiment of this application further provides a computer-readable storage medium. The computer-readable storage medium is a non-volatile computer-readable storage medium. The computer-readable storage medium includes computer program instructions. When the computer program instructions are executed by a processor, a computing device including a processor, or a computer system, the processor, the computing device including the processor, or the computer system performs the communication method provided in embodiments of this application.

An embodiment of this application further provides a computer program product including instructions. When the instructions are run by a processor, a computing device including a processor, or a computer system, the processor, the computing device including the processor, or the computer system is enabled to implement the communication method provided in embodiments of this application.

The computer system is a system having a computing processing capability. The computer system usually includes a processor and a memory. The processor is configured to invoke, from the memory, and run instructions stored in the memory, so that the computer system implements the foregoing communication method. Optionally, the computer system may further include at least one of an input interface or an output interface. The processor, the memory, the input interface, and the output interface in the computer system are connected through an internal connection path.

Persons of ordinary skill in the art may understand that all or some of the steps of embodiments may be implemented by hardware or a program instructing related hardware. The program may be stored in a computer-readable storage medium. The storage medium mentioned above may be a read-only memory, a magnetic disk, an optical disc, or the like.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions.

An embodiment of this application further provides a chip. The chip includes a processor configured to run program instructions or code. The chip or a device including the chip may be configured to perform the communication method provided in embodiments of this application. For example, the chip further includes an input interface, an output interface, and a memory. The input interface, the output interface, the processor, and the memory in the chip are connected through an internal connection path of the chip. The memory in the chip is configured to store program instructions or code run by the processor. The input interface and the output interface in the chip are configured to perform connection and communication between the chip and another chip or device.

In embodiments of this application, the terms "first", "second", and "third" are merely used for description, but shall not be understood as an indication or implication of relative importance. The term "at least one" means one or more, and the term "a plurality of" means at least two, unless otherwise expressly limited.

The term "and/or" in this application is merely an association relationship for describing associated objects, and indicates that three relationships may exist. For example, A and/or B may represent: Only A exists, both A and B exist, and only B exists. In addition, the character "/" in this specification generally indicates an "or" relationship between the associated objects.

It should be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It should be understood that determining B based on A does not mean that B is determined based on only A, but B may alternatively be determined based on A and/or other information.

It should be understood that the term "include" (also referred to as "includes", "including", "comprises", and/or "comprising"), when used in this specification, specifies the presence of stated features, integers, steps, operations, elements, and/or components, but does not preclude presence or addition of one or more other features, integers, steps, operations, elements, components, and/or groups thereof.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

The foregoing descriptions are merely optional embodiments of this application, but are not intended to limit this application. Any modification, equivalent replacement, improvement, or the like made within the concept and principle of this application shall fall within the protection scope of this application.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A communication method, wherein the method is performed by a first network device in a first data center, DC, and the method comprises:
obtaining a node identifier of a first access device in the first DC; and
sending the node identifier of the first access device, first link bandwidth indication information, and first interface mapping information to a second network device in a second DC, wherein the first link bandwidth indication information indicates a total bandwidth of all normal links that are used to transmit traffic and that are between the first network device and the first access device, the first interface mapping information indicates a mapping relationship between at least one network-side interface and at least one access-side interface in the first network device, the at least one network-side interface is configured to connect to the second network device, and the at least one access-side interface is configured to connect to the first access device.

2. The method according to claim 1, wherein obtaining the node identifier of the first access device comprises:
receiving a first border gateway protocol update, BGP, update message sent by the first access device, wherein the first BGP update message carries the node identifier of the first access device.

3. The method according to claim 2, wherein the first BGP update message carries the node identifier of the first access device by reusing an extended community attribute, using a new attribute, or using a new extended attribute.

4. The method according to claim 1, wherein obtaining the node identifier of the first access device comprises:
receiving the node identifier of the first access device sent by the first access device according to a transmission control protocol, TCP, or a user datagram protocol, UDP.

5. The method according to any one of claims 1 to 4, wherein sending the node identifier of the first access device, the first link bandwidth indication information, and the first interface mapping information to the second network device comprises:
sending a second BGP update message to the second network device, wherein the second BGP update message carries the node identifier of the first access device, the first link bandwidth indication information, and the first interface mapping information.

6. The method according to any one of claims 1 to 5, wherein the first link bandwidth indication information comprises one or more of the following: a total bandwidth value of all the normal links, a quantity of all the normal links, or a bandwidth value of at least one of all the normal links.

7. The method according to any one of claims 1 to 6, wherein the first interface mapping information comprises identification information of a network-side interface, identification information of an access-side interface, and an interface mapping rule.

8. The method according to any one of claims 1 to 7, wherein sending the node identifier of the first access device, the first link bandwidth indication information, and the first interface mapping information to the second network device comprises:
sending the node identifier of the first access device, the first link bandwidth indication information, and the first interface mapping information to the second network device according to the TCP or the UDP.

9. The method according to any one of claims 1 to 8, wherein all the normal links comprise a plurality of links, the plurality of links comprise a first link, and the method further comprises:
sending the node identifier of the first access device, updated second link bandwidth indication information, and updated second interface mapping information to the second network device in response to a fault of the first link.

10. The method according to any one of claims 1 to 9, wherein the first access device is a top of rack TOR switch, and the first network device and the second network device are Spine switches.

11. A communication method, wherein the method is performed by a second network device in a second data center DC, and the method comprises:
receiving a node identifier of a first access device, first link bandwidth indication information, and first interface mapping information that are sent by a first network device, wherein the first network device and the first access device are devices in a first DC, the first link bandwidth indication information indicates a total bandwidth of all normal links that are used to transmit traffic and that are between the first network device and the first access device, the first interface mapping information indicates a mapping relationship between at least one network-side interface and at least one access-side interface in the first network device, the at least one network-side interface is configured to connect to the second network device, and the at least one access-side interface is configured to connect to the first access device; and
determining, based on the node identifier of the first access device, the first link bandwidth indication information, and the first interface mapping information, a first transmission link that is used to forward traffic to the first access device and that is between the first network device and the second network device.

12. A communication method, wherein the method is performed by a second network device in a second data center DC, and the method comprises:
receiving a node identifier of a first access device in a first DC, first link bandwidth indication information, and first interface mapping information that are sent by a first network device in the first DC, wherein the first link bandwidth indication information indicates a total bandwidth of all normal links that are used to transmit traffic and that are between the first network device and the first access device, the first interface mapping information indicates a mapping relationship between at least one network-side interface and at least one access-side interface in the first network device, the at least one network-side interface is configured to connect to the second network device, and the at least one access-side interface is configured to connect to the first access device; and
in response to a fault of any one of a plurality of links that are used to forward the traffic and that are between the first network device and the second network device, re-determining, based on the node identifier of the first access device, the first link bandwidth indication information, and the first interface mapping information, a transmission link that is used to forward traffic to the first access device and that is between the first network device and the second network device.

13. A communication apparatus, comprising: a memory, a network interface, and one or more processors, wherein the one or more processors receive or send data through the network interface, and the one or more processors are configured to read program instructions stored in the memory, to perform the method according to any one of claims 1 to 12.

14. A communication system, wherein the system comprises a first network device in a first data center DC and a second network device in a second data center DC, the first network device is configured to perform the method according to any one of claims 1 to 10, and the second network device is configured to perform the method according to any one of claims 11 to 12.

15. A computer-readable storage medium, comprising computer program instructions, wherein when the computer program instructions are executed by a processor, the processor or a device comprising the processor performs the method according to any one of claims 1 to 12.
